(19) Europäisches Patentamt
European Patent Office
Office européen des brevets

(11) **EP 1 942 493 B1**

(12) **EUROPEAN PATENT SPECIFICATION**

(45) Date of publication and mention
of the grant of the patent:
**19.05.2010   Bulletin 2010/20**

(51) Int Cl.:
*G11B 7/0065* $^{(2006.01)}$     *G03H 1/22* $^{(2006.01)}$

(21) Application number: **07024233.4**

(22) Date of filing: **13.12.2007**

(54) **Wavelength control method controlling the wavelength for recording or reproducing information with holography,  hologram information processing apparatus and hologram recording medium**

Methode zur Kontrolle der Wellenlänge bei holographischer Aufnahme oder Wiedergabe von Information, Datenverarbeitungsgerät für Hologramme und holographischer Datenträger

Méthode de contrôle de la longueur d'onde pour enregistrement ou lecture de l'information holographique, appareil de traitement de données holographiques et support de données holographiques

(84) Designated Contracting States:
**DE FR**

(30) Priority: **15.12.2006   JP 2006338731**

(43) Date of publication of application:
**09.07.2008   Bulletin 2008/28**

(73) Proprietor: **Sharp Kabushiki Kaisha**
**Osaka-shi, Osaka 545-8522 (JP)**

(72) Inventors:
 • **Kanazawa, Yasunori**
**Nara-shi**
**Nara 631-0846 (JP)**

 • **Ueyama, Tetsuo**
**Nara-shi**
**Nara 631-0078 (JP)**

(74) Representative: **Müller - Hoffmann & Partner**
**Patentanwälte**
**Innere Wiener Strasse 17**
**81667 München (DE)**

(56) References cited:
**EP-A- 1 732 066**     **JP-A- 2005 044 448**
**JP-A- 2006 267 803**     **JP-A- 2006 268 933**
**US-A1- 2002 075 776**     **US-A1- 2005 134 948**
**US-A1- 2006 114 535**     **US-A1- 2006 133 237**
**US-A1- 2006 171 284**     **US-A1- 2006 215 527**
**US-A1- 2006 215 528**     **US-A1- 2006 280 210**

## Description

This nonprovisional application is based on Japanese Patent Application No. 2006-338731 filed with the Japan Patent Office on December 15, 2006.

BACKGROUND OF THE INVENTION

Field of the Invention

The present invention relates to an information processing apparatus and an information recording medium, and particularly to a hologram information processing apparatus and a hologram recording medium for recording and/or reproducing information with holography.

Description of the Background Art

Holography recording that records information on hologram recording medium with holography in the prior art is generally performed in such a manner that object light containing image information and reference light for recording are superimposed on each other in the hologram recording medium, and an interference pattern produced thereby is written into the hologram recording medium.

For reproducing the information recorded in the hologram recording medium, the hologram recording medium is irradiated with reference light for reproduction, and thereby image information is reproduced by diffraction by the interference pattern.

In recent years, volume holography and particularly digital volume holography have been developed in a practical range for very-high-density optical recording, and has received attention.

The volume holography is a holographic recording method that also uses positively a thickness direction of a hologram recording medium, and writes an interference pattern in a three-dimensional fashion into the hologram recording medium.

The volume holography has such a feature that diffraction efficiency can be increased by increasing the thickness of hologram recording medium, and a record capacity can be increased using multiple recording.

The digital volume holography is a computer-oriented hologram recording method that uses the information recording medium and recording method similar to those of the volume hologram, but uses only binarized digital pattern as image information to be recorded.

In the digital volume holography, for example, image information such as a picture in an analog form is once digitized to develop it into two-dimensional digital pattern information, which is recorded as image information. For reproducing the digital volume holography, this digital pattern information is read out and decoded, and thereby it is restored into the original image information and is displayed.

Thereby, even when an SN (Signal-to-Noise) ratio for reproduction is poor to a certain extent, the original information can be reproduced with high fidelity by performing derivative detection or by coding binary data and performing error correction.

In the hologram recording, the interference pattern of object light and record reference light is recorded. In the reproduction operation, diffraction of reproduction reference light and interference pattern is reproduced. In these operations, variations in wave length are liable to affect the interference phenomenon. If the wave lengths of the object light and the reference light in the reproducing operation are different from those in the recording operation, a wave surface with respect to the hologram recording medium in the recording operation is different from that in the reproducing operation, resulting in a problem that the SN ratio is extremely poor.

For bringing the holographic recording into practical use, it is important to match the wavelength for recording with that for reproduction with high accuracy. However, when the hologram recording medium expands or shrinks due to changes in temperature as compared with the density in the record processing, this results in a problem that the optimum reproduction wavelength is different from the wavelength in the record processing.

A conventional hologram information processing apparatus records a designated pattern a hologram recording medium by causing interference between object light and reference light. For recording or reproducing data, the information light having the predetermined pattern is produced, and the signal reproduced thereby is used for finely adjusting the tilting of the recording medium, focusing and wavelength of a light source by servo-control. This method is disclosed, e.g., in Japanese Patent Laying-Open No. 2006-155831.

A conventional hologram information processing apparatus will now be described.

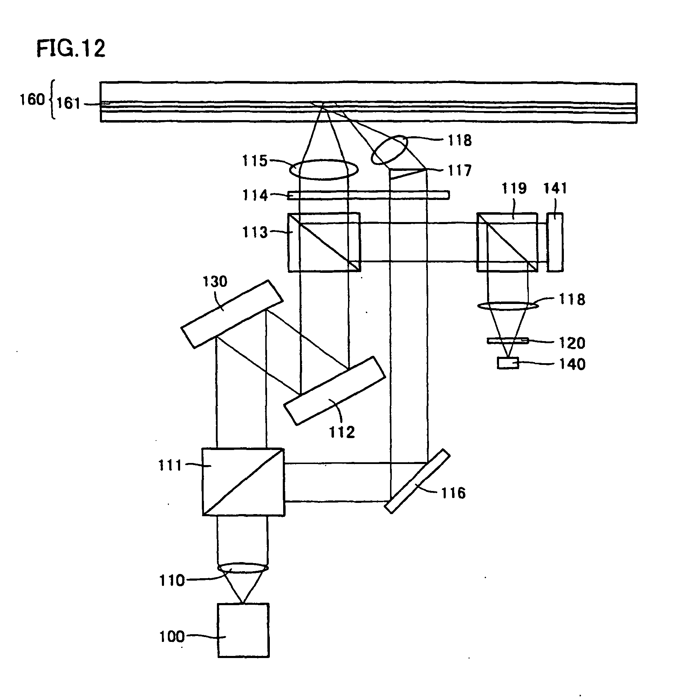

Fig. 12 shows a structure of a conventional hologram information processing apparatus.

A recording operation of the conventional hologram information processing apparatus will now be described.

A light source 100 emitting coherent light emits polarized light beams (e.g., P-polarized light), and a coherent lens 110 changes it into parallel light, which enters a half mirror 111.

The polarized light beam is split into two beams by half mirror 111. One of the beams enters a spatial light modulator 130 and becomes object light containing information, and the other becomes reference light.

The object light will now be described.

On of the light beams bear data applied to spatial light modulator 130.

Spatial light modulator 130 has many minute mirrors corresponding to respective bits forming the digital data, and is configured to change a reflection angle according to a value ("0" or "1") of each bit and thereby to produce a light figure according to digital data to be recorded in the hologram recording medium. The light beam bearing the information corresponds to the object light.

The object light is then reflected by a mirror 112, and enters a polarized beam splitter 113. Polarization beam splitter 113 has a polarization select film that passes P-polarized light and reflects S-polarized light. Therefore, the object light passes through polarized beam splitter 113, and enters a quarter-wavelength plate 114, which changes the object light into circularly polarized light. An objective lens 115 changes the light into convergent light, and applies it to a hologram recording medium 160.

The reference light will now be described.

A mirror 116 changes a traveling direction of the other of the light beams (reference light) split by half mirror 111. Further, a prism 117 changes the traveling direction again. Quarter-wavelength plate 114 changes the reference light into circularly polarized light. The light enters an objective lens 118 so that the light in the convergent form enters hologram recording medium 160.

Hologram recording medium 160 has an information record layer 161, which can record the interference pattern of the object light and the reference light.

Operations for reproduction will now be described. Only the reference light is used for the reproduction.

The reference light entering hologram recording medium 160 bears information recorded in information record layer 161, and is reflected by the reflection layer toward objective lens 115. The reference light passed through objective lens 115 becomes parallel light, enters quarter-wavelength plate 114 and changes into the S-polarized light. Polarization beam splitter 113 reflects the S-polarized light, and leads it to a half mirror 119.

One of the light beams split by half mirror 119 enters an image-taking element 141 so that a reproduced image is obtained. Image-taking element 141 is formed of an area sensor having a plurality of photoelectric conversion elements that are arranged in a matrix form to provide a resolution equal to or higher than that of spatial light modulator 130, and is formed of, e.g., a CCD area sensor. The other light beam becomes convergent light, which passes through a cylindrical lens 120 and then enters a light receiving element 140.

In the prior art, the following method is executed. This method employs special data having designated special pattern that is different from a light figure (which will be referred to as a "record patter" hereinafter) produced by the spatial light modulator based on the record data. In the record operation, this special data is recorded at a designated address in the hologram recording medium. In the recording operation and the reproducing operation, the pattern of the special data (this pattern will be referred to as the "special patter" hereinafter for distinction from the record pattern of the record data) is used for finely adjusting the focusing of the hologram recording medium, the tilting and the control of the wavelength.

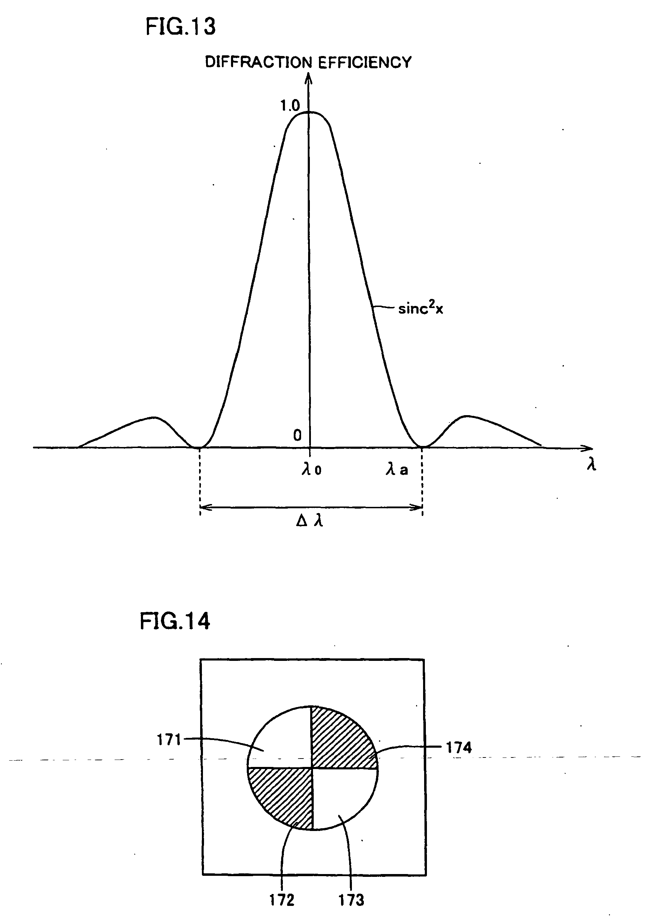

Fig. 13 is a graph in which the abscissa gives an amount of deviation of the wavelength, and the ordinates gives diffraction efficiency.

Referring to Fig. 13, a hologram recorded with a record wavelength $\lambda_0$ that is a specific wavelength exhibits characteristics illustrated in this graph when it is reproduced.

When a deviation of $\lambda/2$ occurs with respect to specific wavelength $\lambda_0$, the diffraction efficiency is zero. Thus, the reproduction light is not present in the reproducing operation. A tolerance of this wavelength is represented by $\Delta\lambda$, and the hologram recording method has a feature that the deviation of the wavelength of the light source rapidly lowers the diffraction efficiency.

Ordinary record data is configured such that each of bits forming this record data is assigned to each minute mirror of the spatial light modulator for producing a light figure (record pattern) of the record light.

Conversely, the special pattern is configured such that the reflection surface of the spatial light modulator is divided into portions each including a plurality of neighboring minute mirrors, and each bit forming the special pattern is assigned to the plurality of minute mirrors forming the division unit for producing the light figure of the record light.

As described above, the resolution of the special pattern of the special data is reduced, and this reduction is performed for increasing the tolerance or margin of the S/N ratio per one bit, and for stabilizing the servo-control with the special pattern of the special data so that the record and reproduction can be performed reliably.

Fig. 14 shows an example of the special pattern.

Referring to Fig. 14, the resolution of the spatial light modulator is reduced as described above, and is divided into four regions. Special pattern regions 171 and 173 have a property of returning the reproduction light to a light receiving surface, and special pattern regions 172 and 174 have a property of leading the reproduction light to a portion other than the light receiving surface.

Then, the servo-control using the special pattern will be described.

Light receiving element 140 receives the reproduction light of the special pattern. Light receiving element 140 is divided into four light receiving regions, which receive the reproduction light from special pattern regions 171 - 174, respectively. When no deviation is present in tilting, focusing, tracking and wavelength, signals s1 - s4 corresponding to the four light receiving regions, respectively, exhibit the relationship that a sum of signals s1 and s4 is equal to a sum of signal s2 and s3.

Titling control is performed before other kinds of servo-control. When a tilt deviation is present between the optical system and the hologram recording medium, the sum of signals s1 and s4 is not equal to the sum of signals s2 and s3. Data of a difference between them is calculated, and a direction of tilting and an adjustment amount thereof are calculated from this difference data. Then, the tilting is adjusted to eliminate the difference.

The tracking and the focus control are performed similarly the above, and finally the fine adjustment of the wavelength is performed. According to the hologram recording method, as described above, a wavelength dependence is present as shown in Fig. 13. More specifically, when the record wavelength is equal to $\lambda_0$ and reproduction wavelength becomes equal to $\lambda_0$, the hologram recording medium attains the highest diffraction efficiency and maximizes the quantity of reproduction light. Therefore, the wavelength maximizing the sum of signals s1 - s4 is equal to $\lambda_0$.

However, the special pattern cannot be detected when a large deviation is present between the record wavelength and the reproduction wavelength in the prior art. Also, a long time is required for the detection. Further, correct adjustment may be impossible if the tilting, tracking and focus control are performed when the wavelength has not been adjusted sufficiently.

US 2006/0280210 A1 describes a holographic memory reproduction apparatus , holographic recording and reproduction apparatus, holographic recording and reproducing method and holographic recording medium making a wavelength of a reproducing laser beam coincident with a wavelength of a laser beam used for holographic recording when information is reproduced from a holographic recording medium.

JP 2006267803 describes a hologram information recording and reproducing device accurately reproducing data multiplexed on a recording medium without reference to an influence of external environment.

US 2006/0171284 A1 describes a method for optical recording, method for optical reproducing, optical recording medium and optical recording and reproducing apparatus utilizing holography.

US 2006/0114535 describes a laser light source device, hologram apparatus and method for detecting laser light, wherein a laser diode emits multimode laser light, a first optical element collimates the laser light emitted from the laser diode, a diffration grating reflects zero-order light in the collimated laser light, a second optical element reflects the zero-order light reflected by the diffraction grating and a first detector detects at least one of a wavelength and an intensity of the light that passes through the second optical element.

EP 1 732 066 A1describes an optical disc recording method and optical disc with at least three recording layers in which test recording areas are formed in the odd-numbered recording layers.

US 2006/0133237 A1 describes an optical recording method and optical recorder wherein a write strategy for use in recording is determined from recommended write stategy parameters recorded on an optical disk and the characteristics of the optical recording device used in recording.

US 2006/0215527 describes a holographic recording medium and recording and reproducing apparatus, wherein recording and reproducing data is performed by irradiation with an information beam and reference beam.

The problem is solved by a wavelength control method according to claim 1, a hologram information processing apparatus according to claim 7 and a hologram recording medium according to claim 17.

SUMMARY OF THE INVENTION

The invention has been made for overcoming the above problems, and an object of the invention is to provide a wavelength control method, a hologram information processing apparatus and a hologram recording medium that allows reading of a wavelength control pattern that is a special patter even when a large deviation is present between a wavelength in an information recording operation and a wavelength in a reproducing operation, allows easy setting of a reproduction wavelength and a record wavelength, and can reduce an adjustment time.

A wavelength control method according to the invention is a wavelength control method for a laser beam in a unit for recording and/or reproducing information in and/or from a hologram recording medium with laser light emitted from a laser light source, and includes the steps of applying the laser light of a plurality of wavelengths to the hologram recording medium; detecting a specific wavelength from a wavelength information signal produced from reproduction light; and adjusting the wavelength of the laser light to the specific wavelength.

Preferably, a quantity of the reproduction light from the hologram recording medium changes corresponding to each of the plurality of wavelengths according to a certain rule, and the detecting step detects a wavelength maximizing the quantity of the reproduction light as the specific wavelength.

Particularly, the adjusting step readjusts the wavelength to maximize the quantity of the reproduction light by minutely changing the wavelength around the calculated specific wavelength.

Preferably, the wavelength information signal includes information representing a difference between the wavelength of the reproduction light and the specific wavelength, and the detecting step calculates the specific wavelength based on the information.

Preferably, the wavelength information signal is information representing a numerical value of the specific wavelength, and the detecting step calculates the specific wavelength from the information.

According to the wavelength control method of the invention, the adjustment to the specific wavelength can be performed using the wavelength information signal so that setting of the reproduction wavelength or the record wavelength can be easily adjusted.

A hologram information processing apparatus according to the invention includes a wavelength-variable laser light source emitting laser light for recording and/or reproducing information in and/or from a hologram recording medium; a light detecting unit detecting reproduction light from the hologram recording medium; and a control unit controlling a wavelength of the laser light of the wavelength-variable laser light source based on a result of detection of the light detecting unit. The hologram recording medium has a first wavelength control region bearing information recorded with a plurality of wavelengths including a specific wavelength, and the light detecting unit detects the reproduction light of the laser light emitted from the wavelength-variable laser light source to the first wavelength control region.

Preferably, the control unit includes a signal processing circuit comparing and processing wavelength information signals obtained by applying the laser light emitted with the plurality of wavelengths to the first wavelength control region, and a wavelength adjustment control unit controlling the wavelength of the laser light of the wavelength-variable laser light source in response to an instruction of the signal processing circuit.

Particularly, the first wavelength control region of the hologram recording medium bears information such that a quantity of the reproduction light changes corresponding to each of the plurality of wavelengths according to a certain rule. The signal processing circuit calculates the wavelength maximizing a signal level as the specific wavelength by comparing the quantities of the reproduction light detected by the light detecting unit and obtained by emitting the laser light with the plurality of wavelengths, respectively. The wavelength adjustment control unit adjusts the wavelength of the laser light of the wavelength-variable laser light source to be equal to the specific wavelength.

Particularly, the signal processing circuit calculates the specific wavelength by detecting information representing a difference between the specific wavelength and the wavelengths of the laser light included in the wavelength information signal obtained by emitting the laser light with the plurality of wavelengths and detected by the light detecting unit. The wavelength adjustment control unit adjusts the wavelength of the laser light of the wavelength-variable laser light source to be equal to the specific wavelength.

Particularly, the signal processing circuit detects information representing a numerical value of the specific wavelength included in the wavelength information signal obtained by emitting the laser light with the plurality of wavelengths and detected by the light detecting unit. The wavelength adjustment control unit adjusts the wavelength of the laser light of the wavelength-variable laser light source to be equal to the specific wavelength.

Preferably, the hologram recording medium further has a second wavelength control region bearing information recorded in advance with the specific wavelength. The control unit adjusts the wavelength of the laser light of the wavelength-variable laser light source based on a result of detection of the light detecting unit with respect to the first wavelength control region. The light detecting unit detects the reproduction light of the laser light emitted from the wavelength variable laser light source with respect to the second wavelength control region after the adjustment. The control unit further adjusts the wavelength of the laser light of the wavelength-variable laser light source to be equal to the specific wavelength based on the result of the detection of the light detecting unit with respect to the second wavelength control region.

Particularly, a range of a detectable wavelength of the first wavelength control region is wider than that of the second wavelength control region, and the control unit calculates the wavelength maximizing the reproduction light detected by the light detecting unit with respect to the first wavelength control region. Further, it performs adjustment such that the wavelength maximizing the reproduction light detected by the light detecting unit with respect to the second wavelength control region becomes equal to the specific wavelength.

Preferably, the wavelength-variable laser light source includes a diffraction grating, and an external-cavity semiconductor laser.

Preferably, the wavelength-variable laser light source further includes a rotation adjustment mechanism rotating the diffraction grating.

The hologram information processing apparatus of the invention can easily detect the specific wavelength with the reproduction light, using the wavelength control region, and can reduce an adjustment time.

A hologram recording medium according to the invention includes an information record region bearing a hologram written by interference between object light and reference light; and a wavelength adjustment region bearing a wavelength information signal for detecting at least one of an optimum record wavelength and an optimum reproduction wavelength.

Preferably, the wavelength adjustment region bears the wavelength information signal corresponding to laser light of each of a plurality of wavelengths. The plurality of wavelengths are set to discrete values, respectively.

Particularly, assuming that a second wavelength is one of wavelengths achieving a diffraction efficiency equal to zero when the wavelength information signal recorded with a first wavelength is reproduced, and is closest to the first wavelength, each of differences between the plurality of wavelengths is set smaller than an absolute value of a difference between the first wavelength and the second wavelength,

Particularly, the wavelength adjustment region bears the wavelength information signal such that a quantity of the reproduction light changes corresponding to the laser light of each of the plurality of wavelengths according to a certain rule, and bears said wavelength information signal such that at least one of the optimum record wavelength and the optimum reproduction wavelength maximizes the quantity of the reproduction light.

Particularly, the wavelength information signal includes information relating to at least one of the optimum record wavelength and the optimum reproduction wavelength for each of the record wavelengths.

Particularly, the wavelength information signal includes information relating to at least one of the optimum record wavelength and the optimum reproduction wavelength for each of the record wavelengths.

Particularly, the wavelength information signal includes information representing a numerical value of at least one of the optimum record wavelength and the optimum reproduction wavelength for each of the record wavelengths.

Particularly, in the wavelength control region, light modulation is not performed on the reproduction light corresponding to the wavelength information signal recorded with the laser light of at least one of the optimum record wavelength and the optimum reproduction wavelength among the wavelength information signals recorded with the laser light of the plurality of wavelengths, respectively.

Preferably, the wavelength adjustment region includes a first wavelength control region providing a wide range of the detectable wavelength, and a second wavelength control region providing a narrow range of the detectable wavelength.

Particularly, the first wavelength control region bears the wavelength information signal recorded with the laser light of the plurality of wavelengths. The plurality of wavelengths are set to discrete values, respectively.

Particularly, the second wavelength control region bears the wavelength information signal recorded with the laser light of a single wavelength.

Preferably, the wavelength control region produces the reproduction light not subjected to light modulation.

Since the hologram recording medium of the invention employs the wavelength adjustment region bearing the wavelength information signal recorded for detecting at least one of the optimum record wavelength and the optimum reproduction wavelength, the wavelength can be adjusted easily and rapidly, using the wavelength adjustment region.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 schematically illustrates a structure of a hologram information processing device according to a first embodiment of the invention.
Fig. 2 illustrates a wavelength-variable laser light source for record and reproduction according to the first embodiment of the invention.
Fig. 3 illustrates a structure of a hologram recording medium according to the first embodiment of the invention.
Fig. 4 illustrates a wavelength control pattern on a spatial light modulator according to the first embodiment of the invention.
Fig. 5 illustrates an example of recording with multiple wavelengths in the wavelength control pattern according to the first embodiment of the invention.
Fig. 6 illustrates a method of determining intervals between the plurality of wavelengths.
Fig. 7 illustrates diffraction efficiency of a fine adjustment pattern.
Fig. 8 is a flowchart illustrating a basic wavelength control method of a wavelength-variable laser according to the first embodiment of the invention.
Fig. 9 is a flowchart specifically illustrating the control method of the wavelength-variable laser according to the first embodiment of the invention.
Fig. 10 illustrates a hologram recording medium which does not form part of the invention but represents background art that is useful for understanding the invention.
Fig. 11 is a flowchart illustrating a control method of a wavelength-variable laser which does not form part of the invention but represents background art that is useful for understanding the invention.
Fig. 12 shows a structure of a conventional hologram information processing apparatus.
Fig. 13 shows a graph in which the abscissa gives a deviation amount of a wavelength and the ordinate gives diffraction efficiency.
Fig. 14 shows an example of a special pattern.

DESCRIPTION OF THE PREFERRED EMBODIMENT

The invention will now be described with reference to the drawings. In the figures, the same or corresponding portions bear the same reference numbers, and description thereof is not repeated.

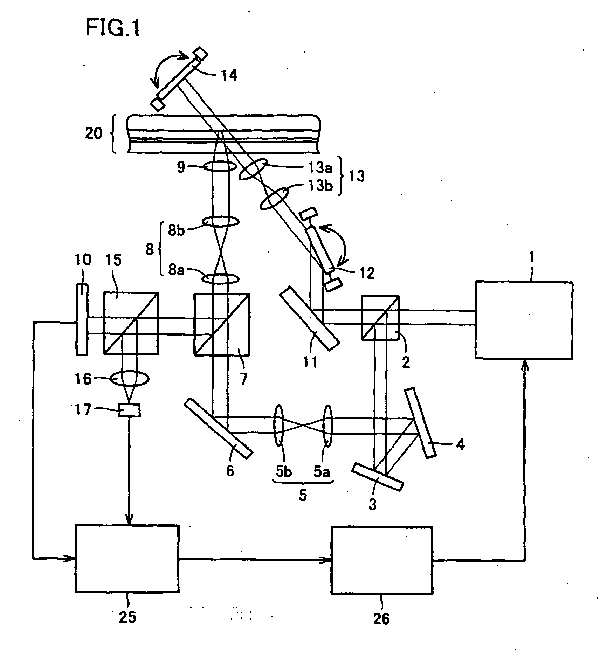

Referring to Fig. 1, a schematic structure of a hologram information processing apparatus according to the invention will be described below.

Referring to Fig. 1, the hologram information processing apparatus according to the invention includes a wavelength-variable laser light source 1 for record and reproduction, a first beam splitter 2, a first reflection mirror 3, a spatial light modulator 4, first relay lenses 5 (5a and 5b), a second reflection mirror 6, a second beam splitter 7, second relay lenses 8 (8a and 8b), an objective lens 9, an image-taking element 10, a third reflection mirror 11, a first galvanomirror 12, a lens system 13 (13a and 13b), a second galvanomirror 14, a third beam splitter 15, a lens 16, a light receiving element 17, a signal processing circuit 25 and a wavelength adjustment control unit 26.

Light emitted from wavelength-variable laser light source 1 is reflected by first beam splitter 2 and first reflection mirror 3, is reflected by spatial light modulator 4, passes through first relay lenses 5 and is further reflected by second reflection mirror 6. Then, the light passes through second beam splitter 7 and second relay lenses 8, and is led to a hologram recording medium 20 by first objective lens 9.

Spatial light modulator 4 is formed of, e.g., a DMD (Digital Mirror Device) having many minute mirrors that have variable reflection surfaces and are arranged in a matrix form. Spatial light modulator 4 produces a light figure corresponding to digital data to be recorded by changing reflection angles according to values ("0" or "1") of the bits and applying the beams to hologram recording medium 20.

This light serves as the record light, and objective lens 9 has the adjusted focus to form an image of this light on a record layer of hologram recording medium 20.

The light passed through first beam splitter 2 is further reflected by third reflection mirror 11, and its optical axis is changed toward the optical axis of the record light by first galvanomirror 12. Then, the light passes through lens system 13 and enters, as the reference light, hologram recording medium 20 at a designated incident angle with respect to the optical axis of the record light.

The record light and the reference light that entered hologram recording medium 20 interfere with each other to generate a hologram, which is recorded in hologram recording medium 20.

The reproducing operation is performed by emitting the reference light similarly to the recording operation, but uses diffraction light (reproduction light) generated from the light that is reflected after passing through hologram recording medium 20 by second galvanomirror 14 at the same angle as the incidence. This diffraction light passes through objective lens 9 and second relay lenses 8, and then the traveling direction thereof is changed by second beam splitter 7.

Then, third beam splitter 15 splits the beam into two beams. One of the beams enters image-taking element 10. The other is changed into a convergent light by lens 16, and then enters light receiving element 17.

Image-taking element 10 is formed of an area sensor having a plurality of photoelectric conversion elements that are arranged in a matrix form to exhibit the resolution equal to or larger than that of spatial light modulator 4. For example, a CCD (Charge-Coupled Device) area sensors or a CMOS (Complementary Metal-Oxide Semiconductor) sensor employing CMOSs may be used as image-taking element 10. Two-dimensional pattern information is reproduced based on the signal detected by image-taking element 10, and the record data recorded in the hologram recording medium is read out. Light receiving element 17 is formed of one light receiving region, and detects a quantity of the reproduction light. When the power of the laser of wavelength-variable laser light source 1 is unstable, light receiving element 17 is used for measuring the power and thereby keeping the laser outgoing power constant by signal processing circuit 25 and wavelength adjustment control unit 26.

Image-taking element 10 and light receiving element 17 form a light detecting unit that detects the reproduction light of the hologram recording medium.

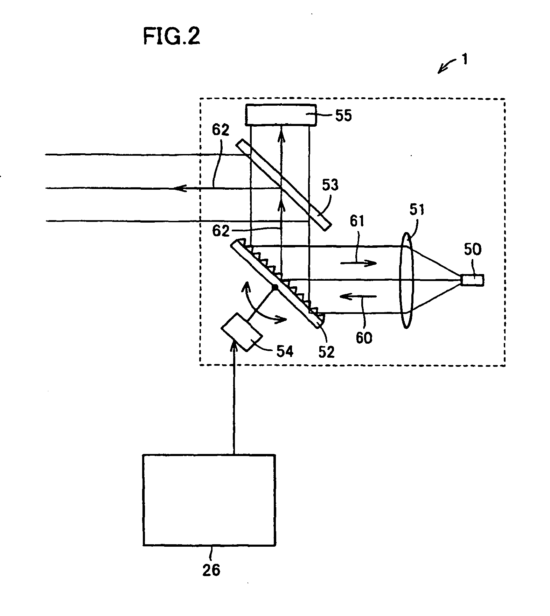

Referring to Fig. 2, description will now be given on wavelength-variable laser light source 1 for record and reproduction according to the first embodiment of the invention.

Referring to Fig. 2, wavelength-variable laser light source 1 according to the first embodiment of the invention is an external-cavity semiconductor laser that is of a so-called Littrow type and includes a semiconductor laser and an external cavity combined together. Using the external cavity structure, it is possible to narrow an oscillation spectrum and to perform single-mode oscillation.

Wavelength-variable laser light source 1 includes a semiconductor laser 50, a collimate lens 51, a diffraction grating 52, a reflection mirror 53, a rotation mechanism 54 and a photodetector 55.

Laser light 60 that is emitted from semiconductor laser 50 and is oscillating in multiple vertical modes (wavelength spectrums) is parallelized by collimate lens 51, and is led to the reflection type of diffraction grating 52.

Diffraction grating 52 generates primary diffraction light of each mode of the vertical modes, and designated primary diffraction light 61 is fed back to semiconductor laser 50 via collimate lens 51 according to an angle of arrangement of diffraction grating 52.

Consequently, semiconductor laser 50 emits the light in the single mode that resonates with primary diffraction light 61 fed back to semiconductor laser 50, and this emitted light has the same wavelength as primary diffraction light 61 returned from diffraction grating 52. Further, zeroth light (reflected light) 62 entering diffraction grating 52 is externally led, and is reflected by reflection mirror 53 to form the outgoing light of wavelength-variable laser light source 1 of the hologram information processing apparatus.

Reflection mirror 53 is configured to pass a part of the light, and photodetector 55 monitors the optical power, the changes in oscillation wavelength and the oscillation spectrum (single-mode or multi-mode).

Description will now be given on a principle of wavelength variability in the Littrow type of the external-cavity semiconductor laser.

Diffraction grating 52 can be turned on a plane perpendicular to the grate groove direction by rotation mechanism 54.

The wavelength of the light fed back to semiconductor laser 50 can be adjusted by changing the arrangement angle (rotation angle) of rotatable diffraction grating 52.

By applying the external-cavity semiconductor laser to the hologram information processing apparatus, fine adjustment can be performed to achieve the wavelength optimum for the record and reproduction.

Wavelength-variable laser light source 1 is not restricted to the Littrow type of external-cavity semiconductor laser and may be, e.g., a Littman type of external-cavity semiconductor laser, a DFB (Distributed Feedback Laser) or a DBR (Distributed Bragg Reflector) laser.

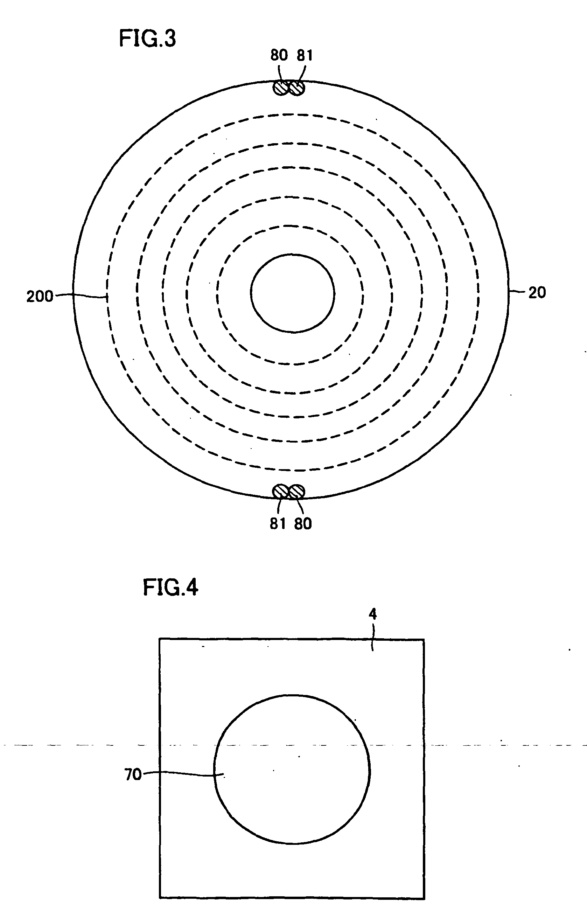

The structure of hologram recording medium 20 according to the first embodiment of the invention will now be described with reference to Fig. 3.

Fig. 3 is a top view schematically showing the structure of hologram recording medium 20 according to the first embodiment.

Referring to Fig. 3, hologram recording medium 20 has, e.g., a disk-like form, has an information record region and bears information along tracks 200.

According to the invention, a wavelength control pattern (wavelength control region) that is a special pattern and is employed for controlling the wavelength is located, e.g., on a radially outer side of the hologram recording medium.

Fig. 3 shows a case in which two different patterns, i.e., a rough adjustment pattern 80 and a fine adjustment pattern 81 are employed as the wavelength control patterns for controlling the wavelength. Regions where these wavelength control patterns, i.e., rough and fine adjustment patterns 80 and 81 are present may be comprehensively referred to as the "wavelength adjustment regions".

In the example described below, two rough adjustment patterns 80 and two fine adjustment patterns 81 are arranged on the radially outer sides of hologram recording medium 20. However, each kind of pattern may be one in number. When the plurality of patterns of the same kind are employed, the detection accuracy can be improved.

In this embodiment shown in Fig. 3, the special data (wavelength information signal) that is the wavelength control pattern is recorded at the address different from those of the ordinary record data. However, a part of the special data (wavelength information signal) that is the wavelength control pattern may be incorporated into the pattern of the record data so that the wavelength control can be performed in real time in the operation(s) of recording and/or reproducing the record data.

The usual record data is configured such that each bit forming the record data is assigned to one minute mirror in spatial light modulator 4 for producing the light figure (record pattern) of the record light. However, according to the conventional wavelength control pattern, the reflection surface of spatial light modulator 4 is divided into units each including a plurality of minute mirrors neighboring to each other, and each bit forming the wavelength control pattern is assigned to the plurality of minute mirrors in the division unit so that the light figure of the record light may be produced.

According to the wavelength control pattern in the first embodiment, a record pattern not bearing the information is produced by apparently eliminating the division number of spatial light modulator 4.

More specifically, the output of wavelength-variable laser 1 is set constant. Also, for the above reasons, the special data (wavelength information signal) of the wavelength control pattern is set such that all the minute mirrors of spatial light modulator 4 are in the same state and lead the whole object light to hologram recording medium 20.

Fig. 4 illustrates the wavelength control pattern on the spatial light modulator according to the first embodiment of the invention.

As shown in Fig. 4, it is assumed, e.g., that all the minute mirrors in a spot 70 of the laser light are set to the same state, and lead the object light to hologram recording medium 20. Thus, the wavelength control pattern is recorded without undergoing the light modulation.

Thereby, the reproduction light from the wavelength control pattern is led to image-taking element 10 and light receiving element 17 at any bit position. Thus, the reproduction light has not undergone the light modulation. Therefore, the quantity of light increases as compared with the case where it bears information (i.e., has undergone the light modulation).

Therefore, the dynamic range of the reproduction light quantity of the wavelength control pattern increases, and the wavelength control can be performed more accurately.

As already described with reference to Fig. 13, the hologram recording method has a feature that the wavelength selectivity is very high with respect to a deviation in wavelength of the reference light, and a slight deviation in wavelength of the reference light rapidly lowers the diffraction efficiency.

It is assumed that the wavelength control pattern according to the first embodiment of the invention is recorded by multiple recording in the same region with a plurality of wavelengths (by wavelength multiplexing). These wavelengths are not continuous but are discrete wavelengths.

The reason for the above is to suppress extremely such a situation that the finite dynamic ranges of the hologram recording medium are used by the recording, and is to achieve the recording with as many wavelengths as possible so that the range of the readable wavelength may be increased. It is also assumed that the plurality of wavelengths include the wavelength used for the information recording or the recommended wavelength (which will be referred to as a "specific wavelength" hereinafter) in the manufacturing processing that optimizes the characteristics of the hologram recording medium, and a plurality of wavelengths are set on each of the opposite sides of a specific wavelength, i.e., on the short wavelength side and the long wavelength side. Further, the plurality of wavelengths are set such that the quantities of the record light of the respective wavelengths differ from each other according to a certain rule and, for example, such that the quantity of the record light of the specific wavelength takes the largest value.

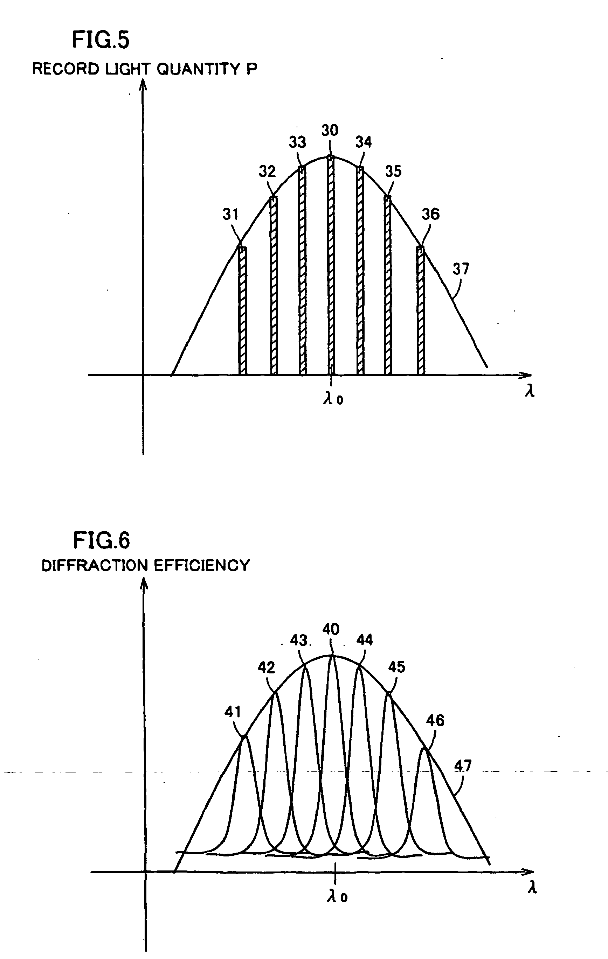

Referring to Fig. 5, description will now be given on an example of the recording of the plurality of wavelengths in the wavelength control pattern according to the first embodiment of the invention. The plurality of wavelengths illustrated therein are not continuous, are discrete wavelengths, respectively, and fall within a wavelength range containing a predetermined specific wavelength.

The abscissa gives a record wavelength $\lambda$, and the ordinate gives a record light quantity P.

In Fig.5, quantities indicated by graphs 30 - 36 represent the record light quantities of the respective wavelengths, respectively.

When specific wavelength $\lambda_0$ is used, the recording is performed with the maximum record light quantity. When the other wavelengths are used, the record light quantities continuously decrease. The record light quantity of each wavelength is appropriately determined under the conditions of a function represented by a light quantity curve 37:

$$P = \sin^2\left(\frac{\pi\lambda}{2\lambda_0}\right)$$

Light quantity curve 3 7 is determined by the function represented by the above equation, and specific wavelength $\lambda_0$ maximizes the record light quantity. The quantity of the reproduction light (i.e., reproduction light quantity) to be described later depends on the quantity of the record light. Therefore, when the record light attains the maximum, the reproduction light attains the maximum.

A method of determining intervals between the plurality of wavelengths will now be described with reference to Fig. 6.

The abscissa gives record wavelength $\lambda$, and the ordinate gives the diffraction efficiency.

A graph 40 shown in Fig. 6 represents the diffraction efficiency with respect to the wavelength recorded with wavelength $\lambda_0$, and is represented by $\text{sinc}^2 x$. Graphs 41 - 46 represent the diffraction efficiency of corresponding wavelengths, respectively. The graphs overlap one another. When the reproduction is performed with a certain wavelength, the reproduction light occurs from the pattern recorded with two or more wavelengths. By using this phenomenon, the intervals between the wavelengths are determined such that the diffraction efficiency of each wavelength becomes continuous to that of the others.

Referring to Fig. 13, it is assumed that a second wavelength $\lambda a$ is one of wavelengths achieving the diffraction efficiency of zero when the information recorded with first wavelength $\lambda_0$ is reproduced, and is closest to first wavelength $\lambda_0$. In this case, each of the intervals between the neighboring wavelengths is set smaller than an absolute value of a difference between first and second wavelengths $\lambda_0$ and $\lambda a$.

Owing to this setting, the graphs of the diffraction efficiency occurring from the data recorded with respective wavelengths overlap one another, and the sum of the wavelength components become continuous.

When the consideration is given to the magnitudes of changes in record light quantity described above and further when the wavelength intervals is optimized, it is possible to achieve such a wavelength control pattern that is continuous and exhibits the maximum efficiency at wavelength $\lambda_0$ as represented by a diffraction efficiency curve 47.

Although the method of controlling the wavelength of wavelength control laser 1 will be described later, the reproduction light can be detected owing to the above fact even when the reproduction is performed with the wavelength significantly different from specific wavelength $\lambda_0$.

When the wavelength of wavelength-variable laser light source 1 is minutely changed to maximize the quantity of the reproduction light, the control to the specific wavelength can be achieved. Further, the time of the wavelength control can be reduced.

Although the wavelength control pattern finally has the characteristics of diffraction efficiency curve 47, the sharpness of the diffraction efficiency with respect to the specific wavelength deteriorates as compared with graph 40 recorded with wavelength $\lambda_0$ alone.

Thus, further wavelength control is required for specifically setting the wavelength.

In the method according to the first embodiment, it is assumed that the wavelength control pattern in question is employed as rough adjustment pattern 80 described with reference to Fig. 3.

Fine adjustment pattern 81 will now described.

For example, fine adjustment pattern 81 is configured to record the wavelength control pattern only with single specific wavelength $\lambda_0$. Therefore, fine adjustment pattern 81 provides a detectable range narrower than that by rough adjustment pattern 80.

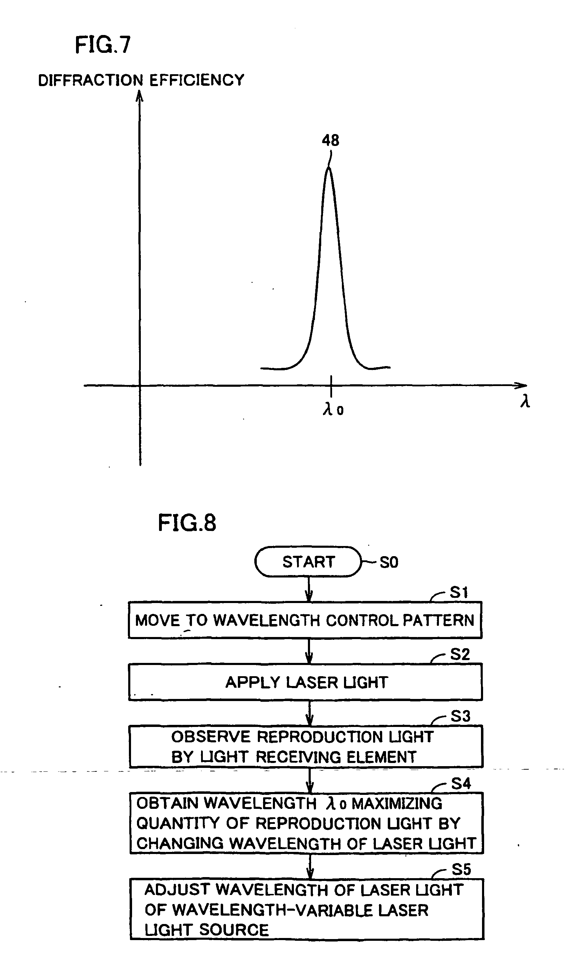

Referring to Fig. 7, the diffraction efficiency of fine adjustment pattern 81 will now be described.

Fig. 7 shows a diffraction efficiency curve 48 of the single specific wavelength $\lambda_0$. The sharpness of the diffraction efficiency with respect to changes in wavelength is higher than that exhibited with wavelength rough adjustment pattern 80, and therefore the wavelength control can be performed more minutely.

More specifically, the fine adjustment can be performed in such a manner that the wavelength of the wavelength-variable laser is roughly adjusted with rough adjustment pattern 80, and then the wavelength is likewise adjusted with fine adjustment pattern 81 to maximize the reproduction light quantity.

When it is not necessary to perform the fine adjustment of the wavelength, fine adjustment pattern 81 for use as the wavelength control pattern may be eliminated, and the wavelength control can be performed only with rough adjustment pattern 80.

Light quantity curve 37 and diffraction efficiency curve 47 already described with reference to Figs. 5 and 6 are not restricted to those already described, and may be defined by other functions that are continuous and exhibit peaks at specific wavelength $\lambda_0$, respectively.

Then, the wavelength control method of wavelength-variable laser 1 according to the first embodiment of the invention will be described.

When a light source such as external-cavity semiconductor laser that controls the wavelength is used, it is necessary in the recording and reproducing operation to perform fine adjustment of the wavelength and/or confirmation of the oscillation wavelength.

For example, in the recording operation, the wavelength control pattern having the record wavelength at its center is recorded in the hologram recording medium. The reproduction is performed by controlling the wavelength of wavelength-variable laser 1 according to the wavelength control pattern to attain the same wavelength as that for the record.

The above example achieves the effect that the wavelength control according to the wavelength control pattern can always provide the wavelength optimum for the reproduction even in such a situation that factors such as temperature changes, variations with time and the like change the properties of the disk and thereby the record wavelength differs from the wavelength optimum for reproduction.

In still another example of use, a wavelength that achieves the best properties in a certain hologram recording medium is handled as a record/reproduction recommended wavelength, and a wavelength control pattern using this wavelength as the optimum wavelength is recorded in the process of manufacturing the hologram recording medium.

In the recording or reproducing operation, wavelength control laser 1 is controlled according to the wavelength control pattern to attain the recommended wavelength, and then the record or reproduction can be performed.

Referring to Fig. 8, description will now be given on the basic wavelength control method of the wavelength-variable laser according to the first embodiment of the invention.

Referring to Fig. 8, for controlling the laser light of the wavelength-variable laser (step S0), an optical system or hologram recording medium 20 is moved (step S1) to attain a state in which a light beam can be applied to the wavelength control pattern.

The reference light that is the laser light is then applied to the wavelength control pattern (step S2).

Then, light receiving element 18 observes the reproduction light from the wavelength control pattern (step S3).

In this operation, diffraction grating 52 arranged in wavelength-variable laser 1 is minutely rotated to change minutely the wavelength of the reference light that is the laser light. The quantity of the reproduction light changes with wavelength, and light receiving element 17 monitors the quantity of the reproduction light to obtain specific wavelength $\lambda_0$ maximizing the quantity of the reproduction light.

The wavelength of the laser light of the wavelength-variable laser light source is adjusted (step S5).

In this flow, signal processing circuit 25 calculates specific wavelength $\lambda_0$ maximizing the light quantity based on the light quantity obtained by light receiving element 17. Also, wavelength adjustment control unit 26 adjusts the wavelength of the laser light of wavelength-variable laser 1 in response to the instruction of signal processing circuit 25. More specifically, wavelength adjustment control unit 26 adjusts the rotation angle of diffraction grating 52 to maximize the quantity of the reproduction light.

The adjusted wavelength is stored for use in recording or reproducing of the hologram recording medium.

Therefore, when the foregoing fine adjustment of the wavelength is not necessary, the wavelength control pattern may be one in number, and the wavelength control may be performed only with rough adjustment pattern 80.

Then, description will be given on a method of further performing the fine adjustment on the wavelength.

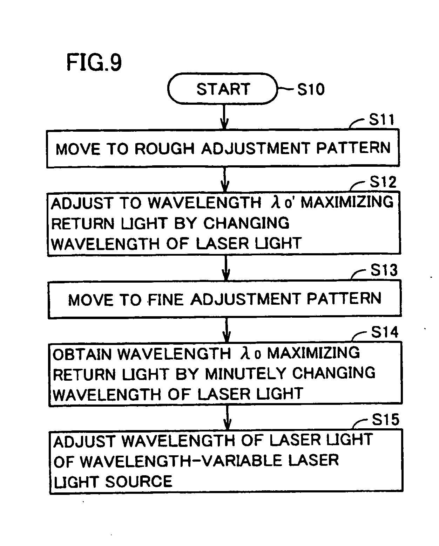

Referring to Fig. 9, the control method of the wavelength-variable laser according to the first embodiment of the invention will now be described.

Referring to Fig. 9, for controlling the wavelength-variable laser (step S10), the optical system or hologram recording medium 20 is moved to rough adjustment pattern 80 (step S11) to attain a state in which the light beam is applied to rough adjustment pattern 80.

Similarly to the manners already described in connection with steps S2 - S5 in Fig. 8, the reference light is applied to rough adjustment pattern 80, light receiving element 17 observes the quantity of the reproduction light, diffraction grating 52 arranged in wavelength-variable laser 1 is rotated minutely to change minutely the wavelength of the reference light, and signal processing circuit 25 and wavelength adjustment control unit 26 adjust the quantity of the reproduction light to attain a wavelength $\lambda_0$' (step S12). More specifically, wavelength adjustment control unit 26 adjusts the rotation angle of diffraction grating 52 to maximize the quantity of the reproduction light.

Then, the optical system or hologram recording medium 20 is moved to fine adjustment pattern 81 (step S13) to attain the state in which the light beam enters fine adjustment pattern 81.

Similarly to the manners already described in connection with steps S2 - S5 in Fig. 8, the reference light is applied to the fine adjustment pattern to observe the quantity of the reproduction light by light receiving element 17, and diffraction grating 52 arranged in the wavelength-variable laser is minutely rotated. More specifically, the wavelength of the reference light is minutely changed within a range near wavelength $\lambda_0$' to obtain wavelength $\lambda_0$ maximizing the quantity of the reproduction light (step S 14).

The wavelength of the laser light of the wavelength-variable light source is adjusted to attain wavelength $\lambda_0$ thus obtained (step S 15).

The adjusted wavelength is stored for use in recording or reproducing of the hologram recording medium.

In the method of the first embodiment of the invention, the wavelength control pattern is recorded with the plurality of wavelengths. Therefore, even when the record wavelength is significantly different from the reproduction wavelength, the wavelength control pattern can be read out, and rapid wavelength control can be performed.

Since the method uses two kinds of patterns, i.e., rough and fine adjustment patterns, it can efficiently execute the wavelength control so that the rapid wavelength control as well as the precise wavelength control can be executed. This example has been described in connection with the two kinds of wavelength control patterns, i.e., the rough and fine adjustment patterns, the patterns are not restricted to two in kind, and more kinds of wavelength control patterns may be employed for improving the precision.

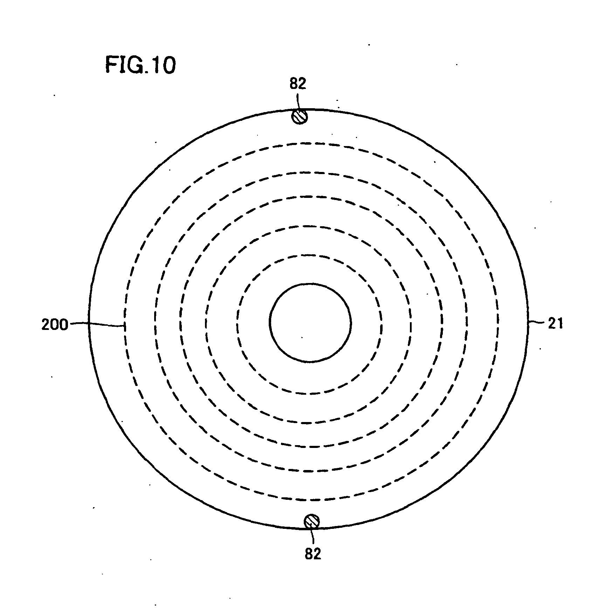

Referring to Fig. 10, description will now be given on a hologram recording medium which does not form part of the invention but represents background art that is useful for understanding the invention.

Referring to Fig. 10, a hologram recording medium 21 differs from hologram recording medium 20 in Fig. 3 in that a wavelength control pattern 82 is employed instead of wavelength control patterns 80 and 81.

In this example, the wavelength control pattern is recorded at the same location with a plurality of wavelengths (wavelength multiplexing).

The invention has already been described in connection with the case in which the wavelength control pattern is recorded with the plurality of wavelengths while changing the record light quantity according to a certain rule. For the invention all the minute mirrors in the spatial light modulator are set uniformly so that the information that is distinguishable from the other is not born. Thus, all the special data items (i.e., all the wavelength information signals) are the same.

The example of Fig. 10, the record light quantity does not change when recording is performed with the plurality of wavelengths, and data items each containing information are recorded. Thus, the method of incorporating special data (wavelength information signal) distinguishable from the others will now be described.

However, when the recording is performed with the wavelength equal to the wavelength used for recording the information or the recommended wavelength (which will be referred to as the "specific wavelength" hereinafter) optimizing the characteristics of the hologram recording medium in the manufacturing process, all the minute mirrors in spatial light modulator 4 are set to the same state for recording, as is done in the invention. Thus, the recording is performed without performing the light modulation. Therefore, the reproduction light in the case where the recording was performed with the specific wavelength has not undergone the light modulation so that the quantity of the return light thereof is larger than that in the case where the information was recorded (i.e., the light modulation was performed).

The structure of wavelength control pattern 82 will now be described in detail.

Wavelength control pattern 82 bears data recorded by multiple recording with a plurality of wavelengths.

When the recording is performed with a wavelength other than specific wavelength $\lambda_0$, the minute mirrors of spatial light modulator 4 are not in the same state, but bear the information. For example, data recorded with a wavelength $(\lambda_0 + \Delta\lambda)$ other than the specific wavelength bears data representing the sign and quantity of $\Delta\lambda$ that is information indicating a difference of the reproduction light with respect to the specific wavelength.

The record light quantity and the diffraction efficiency of the data recorded with the wavelength other than the specific wavelength are the same as those of the data recorded with the specific wavelength, and are set by parameters allowing easy reproduction of the data.

It is not essential that the data recorded with the wavelength $(\lambda_0 + \Delta\lambda)$ other than the specific wavelength bears the information representing the sign and the quantity of $\Delta\lambda$, and this data may contain information representing only the sign of $\Delta\lambda$, or may contain the value itself of wavelength $\lambda_0$, i.e., the numerical value of the specific wavelength.

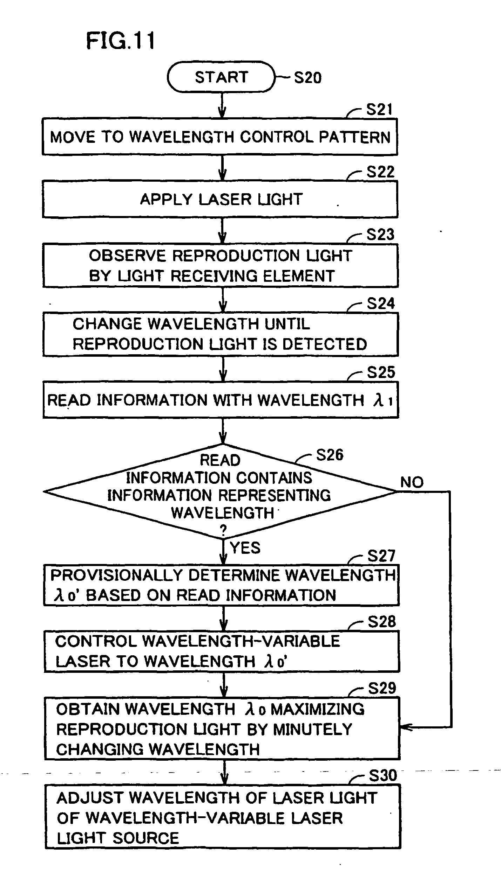

Then, description will be given on the control method of the wavelength-variable laser according to the second embodiment of the invention with reference to Fig. 11.

Referring to Fig. 11, when the wavelength-variable laser is to be controlled (step S20), the optical system or hologram recording medium 20 is moved (step S21) to attain the state in which the light beam enters wavelength control pattern 82.

Then, the reference light is applied to wavelength control pattern 82 (step S22), and image-taking element 10 observes the reproduction light (step S23). Diffraction grating 52 arranged in wavelength-variable laser 1 is finely rotated to change the wavelength of the reference light until the return light, i.e., the reproduction light is detected (step S24).

When the reproduction light is controlled to attain wavelength $\lambda 1$ that can be detected by light receiving element 14, image-taking element 10 reads the information (wavelength information signal) from the wavelength control pattern with wavelength $\lambda 1$ (step S25). It is assumed, e.g., that the wavelength information signal bear the sign and the quantity of $\Delta\lambda$.

It is determined whether the data obtained from signal processing circuit 25 contains the information representing the sign and the quantity of $\Delta\lambda$ or not (step S26).

When it is determined in step S26 that the information representing the sign and the quantity of $\Delta\lambda$ is contained, specific wavelength $\lambda_0'$ providing wavelength $\Delta\lambda$ equal to zero is provisionally determined based on this information (step S27).

Wavelength adjustment control unit 26 controls wavelength-variable laser light source 1 to adjust the wavelength of the laser light to specific wavelength $\lambda_0'$ (step S28).

Using light receiving element 17, the wavelength of wavelength-variable laser light source 1 is minutely changed around wavelength $\lambda_0'$ to obtain wavelength $\lambda_0$ maximizing the reproduction light (step S29).

Wavelength adjustment control unit 26 controls wavelength-variable laser light source 1 to attain calculated wavelength $\lambda_0$, and thereby adjusts the wavelength of the laser light (step S30).

The wavelength thus adjusted is stored for use in recording or reproducing on the hologram recording medium.

When it is determined in step S26 that the data obtained from signal processing circuit 25 does not contain the information representing the sign and the quantity of $\Delta\lambda$, it is presumed that the current wavelength of the laser light of wavelength-variable laser light source 1 is equal to the specific wavelength, as already described. Thus, it is determined that wavelength $\lambda1$ is close to $\lambda_0$ so that the process proceeds to step S29.

Then, the wavelength of wavelength-variable laser light source 1 is minutely changed using light receiving element 17 as already described, and wavelength $\lambda_0$ maximizing the reproduction light is calculated. The processing after the above is the same as that already described, and therefore description thereof is not repeated.

In the method of this example illustrated in Fig. 11, the wavelength control pattern is recorded with the plurality of wavelengths similarly to the method according to the first embodiment, and therefore the wavelength control pattern can be read out even when the record wavelength is significantly different from the reproduction wavelength so that the rapid wavelength control can be performed.

In the method already described, the data contains the information representing the sign and the quantity of $\Delta\lambda$. However, when the data contains only the sign of $\Delta\lambda$ and does not contain the information representing the quantity, the method can be implemented by changing the wavelength of the laser beam and provisionally determining the wavelength of the laser beam of which sign is not detected. When the data contains the information representing the value itself of wavelength $\lambda_0$, the wavelength of the laser beam can be adjusted based on this data.

The wavelength control pattern described above may be configured to control the optimum record wavelength for the information recording, and may be configured to control the optimum record wavelength for the information reproducing. Therefore, when the optimum reproduction wavelength is different from the optimum record wavelength, it is desired to provide the different wavelength control patterns for them, respectively. When the optimum record wavelength and the optimum reproduction wavelength are equal to each other, it is desired to use the same wavelength control pattern for both the record and reproduction.

The hologram information processing apparatus according to the invention can likewise be applied to a hologram information processing apparatus that can perform only record of information on a hologram recording medium by holography, a hologram information processing apparatus that can perform only reproduction of recorded information on a hologram recording medium by holography, and a hologram information processing apparatus that can perform both the record and reproduction.

Although the present invention has been described and illustrated in detail, it is clearly understood that the same is by way of illustration and example only and is not to be taken by way of limitation, the scope of the present invention being defined by the appended claims.

## Claims

1. A wavelength control method for a laser beam in means for recording and/or reproducing information in and/or from a hologram recording medium (20) comprising a first wavelength control region (80) and a second wavelength control region (81) with laser light emitted from a laser light source (1), comprising:

   (A) applying said laser light to said hologram recording medium (20);
   (B) detecting a specific wavelength $\lambda_0$ from wavelength information produced from reproduction light; and
   (C) adjusting said wavelength $\lambda$ of said laser light to said specific wavelength $\lambda_0$.

   **characterized in that** said detecting (B) and said adjusting (C) are performed by

   - first roughly adjusting the wavelength $\lambda$ of the laser light of the wavelength-variable laser light source (1) based on wavelength information obtained from the first wavelength control region (80) to obtain a roughly adjusted wavelength $\lambda_0'$ and
   - then finely adjusting the roughly adjusted wavelength $\lambda_0$ of the laser light of the wavelength-variable laser light source (1) based on wavelength information obtained from the second wavelength control region (81) to obtain said specific wavelength $\lambda_0$.

2. The wavelength control method according to claim 1, wherein said wavelength control regions are part of said hologram recording medium (20) bearing information recorded with said specific wavelength $\lambda_0$.

3. The wavelength control method according to claim 1 or 2,
wherein said detecting (B) detects a wavelength maximizing the quantity of said reproduction light as the specific wavelength $\lambda_0$.

4. The wavelength control method according to claim 3,
wherein said adjusting (C) readjusts the wavelength X to maximize said reproduction light by minutely changing the wavelength $\lambda$ around the specific wavelength $\lambda_0$.

5. The wavelength control method according to claim 1 or 2,
wherein said wavelength information includes information representing a difference between the wavelength $\lambda$ of the reproduction light and the specific wavelength $\lambda_0$, and
wherein said detecting (B) calculates said specific wavelength based on said wavelength information.

6. The wavelength control method according to claim 1 or 2,
wherein said wavelength information is information representing a numerical value of said specific wavelength, and
wherein said detecting (B) calculates said specific wavelength from said information.

7. A hologram information processing apparatus, comprising:

a wavelength-variable laser light source (1) for emitting laser light for recording and/or reproducing information in and/or from a hologram recording medium (20);
a light detecting unit (10, 17) for detecting (B) reproduction light from said hologram recording medium (20); and
a control unit (26) for controlling a wavelength $\lambda$ of said laser light of said wavelength-variable laser light source (1) based on a result of detection of said light detecting unit (10, 17), and for adjusting (C) said wavelength $\lambda$ of said laser light to a specific wavelength $\lambda_0$,
**characterized in that** the control unit (26) is configured for detecting (B) and adjusting (C) by first roughly adjusting the wavelength $\lambda$ of the

laser light of the wavelength-variable laser light source (1) based on wavelength information obtained from a first wavelength control region (80) of the hologram recording medium (2a) to obtain a roughly adjusted wavelength $\lambda_0$' and
then finely adjusting the roughly adjusted wavelength $\lambda_0$' of the laser light of the wavelength-variable laser light source (1) based on wavelength information obtained from a second wavelength control region (81) of the hologram recording medium (2a) to obtain said specific wavelength $\lambda_0$.

8. The hologram information processing apparatus according to claim 7,
therein said light detecting unit (10, 17) is configured to detect the reproduction light of the laser light emitted from said wavelength-variable laser light source (1) to at least one wavelength control region (80, 81, 82) of said hologram recording medium bearing information recorded with a specific wavelength $\lambda_0$.

9. The hologram information processing apparatus according to claim 7 or 8,
wherein said control unit (26) includes:

a signal processing circuit (25) for comparing and for processing wavelength information obtained by applying said laser light emitted to said at least one wavelength control region (80, 81, 82), and
a wavelength adjustment control unit (26) for controlling the wavelength $\lambda$ of said laser light of said wavelength-variable laser light source (1) in response to an instruction of said signal processing circuit (25).

10. The hologram information processing apparatus according to claim 9,
wherein said signal processing circuit (25) is configured to calculate the wavelength maximizing a quantity of the reproduction light as the specific wavelength by comparing the quantities of the reproduction light detected by said light detecting unit (10, 17) and obtained by emitting said laser light, respectively, and
wherein said wavelength adjustment control unit (26) is configured to adjust the wavelength $\lambda$ of said laser light of said wavelength-variable laser light source (1) to be equal to said specific wavelength $\lambda_0$.

11. The hologram information processing apparatus according to claim 9,
wherein said signal processing circuit (25) is configured to calculate said specific wavelength by detecting information representing a difference between said specific wavelength $\lambda_0$ and the wavelength of said laser light included in the wavelength information obtained by emitting said laser light and detected by said light detecting unit (10, 17), and
wherein said wavelength adjustment control unit (26) is configured to adjust the wavelength $\lambda$ of said laser light of said wavelength-variable laser light source (1) to be equal to said specific wavelength $\lambda_0$.

12. The hologram information processing apparatus according to claim 9,
wherein said signal processing circuit (25) is configured to detect information representing a numerical value of the specific wavelength $\lambda_0$ included in the wavelength information obtained by emitting said laser light and detected by said light detecting unit (10, 17), and
wherein said wavelength adjustment control unit (26) is configured to adjust the wavelength $\lambda$ of said laser light of said wavelength-variable laser light source (1) to be equal to said specific wavelength $\lambda_0$.

13. The hologram information processing apparatus according to claim 7 or 8.
wherein said control unit (26) is configured to adjust the wavelength X of said laser light of said wavelength-variable laser light source (1) based on a result of detection of said light detecting unit (10, 17) with respect to a first wavelength control region (80) of said hologram recording medium (20) after said adjustment,
wherein said light detecting unit (10, 17) is configured to detect the reproduction light of the laser light emitted from said wavelength variable laser light source (1) with respect to a second wavelength control region (81) of said hologram recording medium (20), and
wherein said control unit (26) is configured to further adjust the wavelength of said laser light of said wavelength-variable laser light source to be equal to said specific wavelength $\lambda_0$ based on the result of the detection of said light detecting unit (10, 17) with respect to said second wavelength control region (81).

14. The hologram information processing apparatus according to claim 13.
wherein a range of a detectable wavelength of said first wavelength control region (80) is wider than that of said second wavelength control region (81), and
wherein said control unit (26) is configured to calculate the wavelength maximizing the reproduction light detected by said light detecting unit (10, 17) with respect to said first wavelength control region (80), and is configured to further perform adjustment such that the wavelength maximizing the reproduction light detected by said light detecting unit (10, 17) with respect to said second wavelength control region (81) becomes equal to said specific wavelength $\lambda_0$.

15. The hologram information processing apparatus according to claim 7 or 8,
wherein said wavelength-variable laser light source (1) includes:

a diffraction grating (52), and
an external-cavity semiconductor laser (50).

16. The hologram information processing apparatus according to claim 15.
wherein said wavelength-variable laser light source (1) further includes a rotation adjustment mechanism (54) for rotating said diffraction grating (52).

17. A hologram recording medium (20),
comprising:

an information record region (200) bearing a hologram written by interference between object light and reference light; and
at least a first and a second wavelength control region (80, 81) bearing wavelength information for detecting a specific wavelength $\lambda_0$ as at least one of an optimum record wavelength and an optimum reproduction wavelength, wherein the first and second wavelength control regions (80,81) are wavelength control pattern having each a maximum diffraction efficiency at wavelength $\lambda_0$,

**characterized in that**
the sharpness of the diffraction efficiency with respect to changes in wavelength is higher for the second wavelength control region (81) than for the first wavelength control region (80) such that said wavelength information contains information for

- first roughly adjusting the wavelength $\lambda$ of the laser light of the wavelength-variable laser light source (1) based on wavelength information obtained from the first wavelength control region to obtain a roughly adjusted wavelength $\lambda_0'$ and
- then finely adjusting the roughly adjusted wavelength $\lambda_0'$ of the laser light of the wavelength-variable laser light source (1) based on wavelength information obtained from the second wavelength control region to obtain said specific wavelength $\lambda_0$.

18. The hologram recording medium (20) according to claim 17,
wherein said wavelength control regions (80, 81) bear said wavelength information corresponding to laser light of each of a plurality of wavelengths, said plurality of wavelengths are set to discrete values, respectively.

19. The hologram recording medium (20) according to claim 18.

wherein assuming that a second wavelength is one of wavelengths achieving a diffraction efficiency equal to zero when the wavelength information signal recorded with a first wavelength is reproduced, and is closest to said first wavelength, each of differences between said plurality of wavelengths is set smaller than an absolute value of a difference between said first wavelength and said second wavelength.

20. The hologram recording medium (20) according to claim 19.
wherein said wavelength control regions (80, 81) bear said wavelength information such that a quantity of the reproduction light changes corresponding to the laser light of each of said plurality of wavelengths according to a certain rule, and bear said wavelength information indicating at least one of the optimum record wavelength and the optimum reproduction wavelength that maximizes the quantity of the reproduction light.

21. The hologram recording medium (20) according to claim 18,
wherein said wavelength information includes information relating to at least one of the optimum record wavelength and the optimum reproduction wavelength; the reproduction wavelength assigned for each of the record wavelengths.

22. The hologram recording medium (20) according to claim 21 ,
wherein said wavelength information includes information representing a numerical value of at least one of the optimum record wavelength and the optimum reproduction wavelength for each of the record wavelengths.

23. The hologram recording medium (20) according to claim 17,
wherein said wavelength control regions (80, 81) include a first wavelength control region (80) providing a wide range of the detectable wavelength, and a second wavelength control region (81) providing a narrow range of the detectable wavelength.

24. The hologram recording medium (20) according to claim 23,
wherein said first wavelength control region (80) bears said wavelength information recorded with the laser light with a plurality of wavelengths set to discrete values, respectively.

25. The hologram recording medium (20) according to claim 24.
wherein said second wavelength control region (81) bears said wavelength information recorded with the laser light of a single wavelength.

**Patentansprüche**

1. Verfahren zum Steuern einer Wellenlänge für einen Laserstrahl in einer Einrichtung zum Aufzeichnen und/oder Wiedergeben von Information in und/oder von einem holographischen Aufzeichnungsmedium (20) mit einem ersten Wellenlängensteuerbereich (80) und einem zweiten Wellenlängensteuerbereich (81) mit von einer Laserlichtquelle (1) emittiertem Laserlicht, mit:

(A) Aufbringen des Laserlichts auf das holographische Aufzeichnungsmedium (20);
(B) Detektieren einer spezifischen Wellenlänge $\lambda_0$ aus einer aus Wiedergabelicht hergestellten Wellenlängeninformation; und
(C) Einstellen der Wellenlänge $\lambda$ des Laserlichts auf die spezifische Wellenlänge $\lambda_0$,

**dadurch gekennzeichnet, dass** das Detektieren (B) und das Einstellen (C) durchgeführt werden durch:

zunächst ein grobes Einstellen der Wellenlänge $\lambda$ des Laserlichts der Laserlichtquelle (1) mit variabler Wellenlänge auf der Grundlage einer von dem ersten Wellenlängensteuerbereich (80) erhaltenen Wellenlängeninformation, zum Erhalten einer grob eingestellten Wellenlänge $\lambda_0$' und danach ein Feineinstellen der grob eingestellten Wellenlänge $\lambda_0$' des Laserlichts der Laserlichtquelle (1) mit variabler Wellenlänge auf der Grundlage einer von dem zweiten Wellenlängensteuerbereich (81) erhaltenen Wellenlängeninformation, zum Erhalten der spezifische Wellenlänge $\lambda_0$.

2. Verfahren zum Steuern der Wellenlänge nach Anspruch 1,
wobei die Wellenlängensteuerbereiche Teil des holographischen Aufzeichnungsmediums (20) sind, das eine mit der spezifischen Wellenlänge $\lambda_0$ aufgezeichnete Information trägt.

3. Verfahren zum Steuern der Wellenlänge nach Anspruch 1 oder 2,
wobei das Detektieren (B) eine Wellenlänge, welche die Menge des Wiedergabelichts maximiert, als die spezifische Wellenlänge $\lambda_0$ detektiert.

4. Verfahren zum Steuern der Wellenlänge nach Anspruch 3,
wobei das Einstellen (C) die Wellenlänge $\lambda$ durch ein minütliches Verändern der Wellenlänge $\lambda$ um die spezifische Wellenlänge $\lambda_0$ herum nachstellt, um das Wiedergabelicht zu maximieren.

5. Verfahren zum Steuern der Wellenlänge nach Anspruch 1 oder 2,

wobei die Wellenlängeninformation eine Information aufweist, die eine Differenz zwischen der Wellenlänge $\lambda$ des Wiedergabelichts und der spezifischen Wellenlänge $\lambda_0$ darstellt, und

wobei das Detektieren (B) die spezifische Wellenlänge auf der Grundlage der Wellenlängeninformation errechnet.

6. Verfahren zum Steuern der Wellenlänge nach Anspruch 1 oder 2,

wobei die Wellenlängeninformation eine Information ist, die einen numerischen Wert der spezifischen Wellenlänge darstellt, und

wobei das Detektieren (B) die spezifische Wellenlänge aus dieser Information errechnet.

7. Informationsverarbeitungsgerät für Hologramme, mit:

einer Laserlichtquelle (1) mit variabler Wellenlänge zum Ausstrahlen von Laserlicht zum Aufzeichnen und/oder Wiedergeben einer Information auf und/oder von einem holographischen Aufzeichnungsmedium (20);
einer Lichtdetektionseinheit (10, 17) zum Detektieren (B) von Wiedergabelicht von dem holographischen Aufzeichnungsmedium (20) und
einer Steuereinheit (26) zum Steuern einer Wellenlänge $\lambda$ des Laserlichts der Laserlichtquelle (1) mit variabler Wellenlänge auf der Grundlage eines Detektionsergebnisses der Lichtdetektionseinheit (10, 17) und zum Einstellen (C) der Wellenlänge $\lambda$ des Laserlichts auf eine spezifische Wellenlänge $\lambda_0$.
**dadurch gekennzeichnet, dass** die Steuereinheit (26)
geeignet ist zum Detektieren (B) und Einstellen (C) durch
zuerst ein grobes Einstellen der Wellenlänge $\lambda$ des Laserlichts der Laserlichtquelle (1) mit variabler Wellenlänge auf der Grundlage einer von einem ersten Wellenlängensteuerbereich (80) des holographischen Aufzeichnungsmediums (20) erhaltenen Wellenlängeninformation, zum Erhalten einer grob eingestellten Wellenlänge $\lambda_0$', und dann ein Feineinstellen der grob eingestellten Wellenlänge $\lambda_0$' des Laserlichts der Laserlichtquelle (1) mit variabler Wellenlänge auf der Grundlage einer von einem zweiten Wellenlängensteuerbereich (81) des holographischen Aufzeichnungsmediums (20) erhaltenen Wellenlängeninformation, zum Erhalten der spezifischen Wellenlänge $\lambda_0$.

8. Informationsverarbeitungsgerät für Hologramme nach Anspruch 7,

wobei die Lichtdetektionseinheit (10, 17) geeignet ist zum Detektieren des Wiedergabelichts des Laserlichts, das von der Laserlichtquelle (1) mit variabler Wellenlänge auf wenigstens einen Wellenlängensteuerbereich (80, 81, 82) des holographischen Aufzeichnungsmediums gestrahlt wurde, welches eine mit der spezifischen Wellenlänge $\lambda_0$ aufgezeichnete Information trägt.

9. Informationsverarbeitungsgerät für Hologramme nach Anspruch 7 oder 8,

wobei die Steuereinheit (26) Folgendes aufweist:

einen Signalverarbeitungsschaltkreis (25) zum Vergleichen und zum Verarbeiten einer durch ein Aufbringen des Laserlichts, das auf wenigstens einen Wellenlängensteuerbereich (80, 81, 82) ausgestrahlt wurde, erhaltenen Wellenlängeninformation, und
eine Wellenlängeneinstellsteuereinheit (26) zum Steuern der Wellenlänge $\lambda$ des Laserlichts der Laserlichtquelle (1) mit variabler Wellenlänge als Antwort auf eine Anweisung des Signalverarbeitungsschaltkreises (25).

10. Informationsverarbeitungsgerät für Hologramme nach Anspruch 9,

wobei der Signalverarbeitungsschaltkreis (25) geeignet ist zum Errechnen der Wellenlänge, die eine Menge des Wiedergabelichts als die spezifische Wellenlänge maximiert, durch ein Vergleichen der Mengen von Wiedergabelicht, das durch die Lichtdetektionseinheit (10, 17) detektiert wurde bzw. durch ein Ausstrahlen des Laserlichts erhalten wurde, und

wobei die Wellenlängeneinstellsteuereinheit (26) geeignet ist zum Einstellen der Wellenlänge $\lambda$ des Laserlichts der Laserlichtquelle (1) mit variabler Wellenlänge, damit diese gleich der spezifischen Wellenlänge $\lambda_0$ ist.

11. Informationsverarbeitungsgerät für Hologramme nach Anspruch 9,

wobei der Signalverarbeitungsschaltkreis (25) geeignet ist zum Errechnen der spezifischen Wellenlänge durch ein Detektieren einer Information, die einen Unterschied darstellt zwischen der spezifischen Wellenlänge $\lambda_0$ und der Wellenlänge des Laserlichts in der Wellenlängeninformation, das durch ein Ausstrahlen des Laserlichts erhalten wurde und durch die Lichtdetektionseinheit (10, 17) detektiert wurde, und

wobei die Wellenlängeneinstellsteuereinheit (26) geeignet ist zum Einstellen der Wellenlänge $\lambda$ des Laserlichts der Laserlichtquelle (1) mit variabler Wellenlänge, sodass diese gleich der spezifischen Wellenlänge $\lambda_0$ ist.

12. Informationsverarbeitungsgerät für Hologramme nach Anspruch 9,
wobei der Signalverarbeitungsschaltkreis (25) geeignet ist zum Detektieren einer Information, die einen numerischen Wert der spezifischen Wellenlänge $\lambda_0$ in der Wellenlängeninformation darstellt, die durch ein Ausstrahlen des Laserlichts erhalten wurde und durch die Lichtdetektionseinheit (10, 17) detektiert wurde, und
wobei die Wellenlängeneinstellungssteuereinheit (26) geeignet ist zum Einstellen der Wellenlänge $\lambda$ des Laserlichts der Laserlichtquelle (1) mit variabler Wellenlänge, sodass diese gleich der spezifischen Wellenlänge $\lambda_0$ ist.

13. Informationsverarbeitungsgerät für Hologramme nach Anspruch 7 oder 8,
wobei die Steuereinheit (26) geeignet ist zum Einstellen der Wellenlänge $\lambda$ des Laserlichts der Laserlichtquelle (1) mit variabler Wellenlänge, auf der Grundlage eines Detektionsergebnisses der Lichtdetektionseinheit (10, 17) in Bezug auf einen ersten Wellenlängensteuerbereich (80) des holographischen Aufzeichnungsmediums (20) nach dem Einstellen,
wobei die Lichtdetektionseinheit (10, 17) geeignet ist zum Detektieren des Wiedergabelichts des Laserlichts, das von der Laserlichtquelle (1) mit variabler Wellenlänge ausgestrahlt wurde, in Bezug auf einen zweiten Wellenlängensteuerbereich (81) des holographischen Aufzeichnungsmediums (20), und
wobei die Steuereinheit (26) geeignet ist zum weiteren Einstellen der Wellenlänge $\lambda$ des Laserlichts der Laserlichtquelle mit variabler Wellenlänge, sodass diese gleich der spezifischen Wellenlänge $\lambda_0$ ist, auf der Grundlage des Detektionsergebnisses der Lichtdetektionseinheit (10, 17) in Bezug auf den zweiten Wellenlängensteuerbereich (81).

14. Informationsverarbeitungsgerät für Hologramme nach Anspruch 13,
wobei ein Bereich einer detektierbaren Wellenlänge des ersten Wellenlängensteuerbereichs (80) breiter ist als der des zweiten Wellenlängensteuerbereichs (81) und
wobei die Steuereinheit (26) geeignet ist zum Errechnen der Wellenlänge, die das Wiedergabelicht maximiert, das durch die Lichtdetektionseinheit (10, 17) in Bezug auf den ersten Wellenlängensteuerbereich (80) detektiert wurde, und geeignet ist zum weiteren Durchführen eines Einstellens, sodass die Wellenlänge, die das Wiedergabelicht maximiert, das durch die Lichtdetektionseinheit (10, 17) in Bezug auf den zweiten Wellenlängensteuerbereich (81) detektiert wurde, gleich der spezifischen Wellenlänge $\lambda_0$ wird.

15. Informationsverarbeitungsgerät für Hologramme nach Anspruch 7 oder 8,

wobei die Laserlichtquelle (1) mit variabler Wellenlänge Folgendes aufweist:

ein Brechungsgitter (52) und
einen Halbleiterlaser (50) mit einer externen Resonanz.

16. Informationsverarbeitungsgerät für Hologramme nach Anspruch 15,
wobei die Laserlichtquelle (1) mit variabler Wellenlänge ferner einen Rotationseinstellmechanismus (54) zum Rotieren des Brechungsgitters (52) aufweist.

17. Holographisches Aufzeichnungsmedium (20) mit:

einem Informationsaufzeichnungsbereich (200), der ein Hologramm trägt, das durch eine Interferenz zwischen einem Objektlicht und einem Referenzlicht geschrieben wurde; und wenigstens einen ersten und einen zweiten Wellenlängensteuerbereich (80, 81), die eine Wellenlängeninformation zum Detektieren einer spezifischen Wellenlänge $\lambda_0$ als wenigstens eine optimale Aufzeichnungswellenlänge oder eine optimale Wiedergabewellenlänge tragen, wobei die ersten und zweiten Wellenlängensteuerbereiche (80, 81) Wellenlängensteuermuster sind, die jeweils eine maximale Brechungseffizienz bei der Wellenlänge $\lambda_0$ aufweisen,
**dadurch gekennzeichnet, dass**
die Schärfe der Brechungseffizienz in Bezug auf Veränderungen in der Wellenlänge für den zweiten Wellenlängensteuerbereich (81) höher ist als für den ersten Wellenlängensteuerbereich (80), sodass die Wellenlängeninformation eine Information aufweist für:

erstens ein grobes Einstellen der Wellenlänge $\lambda$ des Laserlichts der Laserlichtquelle (1) mit variabler Wellenlänge auf der Grundlage einer von dem ersten Wellenlängensteuerbereich erhaltenen Wellenlängeninformation, zum Erhalten einer grob eingestellten Wellenlänge $\lambda_0'$ und
danach ein Feineinstellen der grob eingestellten Wellenlänge $\lambda_0'$ des Laserlichts der Laserlichtquelle (1) mit variabler Wellenlänge auf der Grundlage einer von dem zweiten Wellenlängensteuerbereich erhaltenen Wellenlängeninformation, zum Erhalten der spezifischen Wellenlänge $\lambda_0$.

18. Holographisches Aufzeichnungsmedium (20) nach Anspruch 17,
wobei die Wellenlängensteuerbereiche (80, 81) die Wellenlängeninformation tragen, die dem Laserlicht jeder der Mehrzahl an Wellenlängen entspricht, wobei die Mehrzahl an Wellenlängen auf entsprechende diskrete Werte eingestellt werden.

19. Holographisches Aufzeichnungsmedium (20) nach Anspruch 18,
   wobei unter der Annahme, dass eine zweite Wellenlänge eine von eine Brechungseffizienz von Null bewirkenden Wellenlängen ist, wenn das Wellenlängeninformationssignal, das mit einer ersten Wellenlänge aufgezeichnet wurde, wiedergegeben wird, und am nächsten bei der ersten Wellenlänge liegt, jeder der Unterschiede zwischen der Mehrzahl von Wellenlängen kleiner eingestellt wird, als ein Absolutwert einer Differenz zwischen der ersten Wellenlänge und der zweiten Wellenlänge.

20. Holographisches Aufzeichnungsmedium (20) nach Anspruch 19,
   wobei die Wellenlängensteuerbereiche (80, 81) die Wellenlängeninformation so tragen, dass eine Menge des Wiedergabelichts sich entsprechend dem Laserlicht von jeder der Mehrzahl von Wellenlängen gemäß einer bestimmten Regel verändert und die Wellenlängeninformation tragen, die wenigstens eine der optimalen Aufzeichnungswellenlänge und der optimalen Wiedergabewellenlänge angibt, welche die Menge des Wiedergabelichts maximiert.

21. Holographisches Aufzeichnungsmedium (20) nach Anspruch 18,
   wobei die Wellenlängeninformation eine Information aufweist, die sich wenigstens auf die optimale Aufzeichnungswellenlänge oder die optimale Wiedergabewellenlänge bezieht;
   wobei die Wiedergabewellenlänge für jede der Aufzeichnungswellenlängen zugeordnet ist.

22. Holographisches Aufzeichnungsmedium (20) nach Anspruch 21,
   wobei die Wellenlängeninformation eine Information enthält, die einen numerischen Wert von wenigstens der optimalen Aufzeichnungswellenlänge oder der optimalen Wiedergabewellenlänge für jede der Aufzeichnungswellenlängen darstellt.

23. Holographisches Aufzeichnungsmedium (20) nach Anspruch 17,
   wobei die Wellenlängensteuerbereiche (80, 81) eine erste Wellenlängensteuereinheit (80), die einen weiten Bereich der detektierbaren Wellenlänge bereitstellt, und einen zweiten Wellenlängensteuerbereich (81), der einen schmalen Bereich der detektierbaren Wellenlänge bereitstellt, aufweist.

24. Holographisches Aufzeichnungsmedium (20) nach Anspruch 23,
   wobei der erste Wellenlängensteuerbereich (80) die Wellenlängeninformation trägt, die mit dem Laserlicht mit einer Mehrzahl von Wellenlängen aufgezeichnet wurde, die jeweils auf diskrete Werte eingestellt wurden.

25. Holographisches Aufzeichnungsmedium (20) nach Anspruch 24,
   wobei der zweite Wellenlängensteuerbereich (81) die Wellenlängeninformation trägt, die mit dem Laserlicht von einer einzigen Wellenlänge aufgezeichnet wurde.

**Revendications**

1. Procédé de commande de longueur d'onde pour un faisceau laser dans un moyen d'enregistrement et/ou de reproduction d'informations dans et/ou depuis un support d'enregistrement d'hologramme (20) comportant une première région de commande de longueur d'onde (80) et une seconde région de commande de longueur d'onde (81) avec une lumière laser émise par une source de lumière laser (1), comportant :

   (A) l'application de ladite lumière laser audit support d'enregistrement d'hologramme (20) ;
   (B) la détection d'une longueur d'onde spécifique $\lambda_0$ à partir d'informations de longueur d'onde produites à partir de la lumière de reproduction ; et
   (C) l'ajustement de ladite longueur d'onde $\lambda$ de ladite lumière laser à ladite longueur d'onde spécifique $\lambda_0$,

   **caractérisé en ce que** ladite détection (B) et ledit ajustement (C) sont effectués par

   - en premier lieu, un ajustement approximatif de la lumière laser de la source lumineuse laser à variation de la longueur d'onde (1) en fonction d'informations de longueur d'onde obtenues dans la première région de commande de longueur d'onde (80) pour obtenir une longueur d'onde $\lambda_0$' approximativement ajustée, et
   - ensuite, un ajustement précis de la longueur d'onde $\lambda_0$' de la lumière laser de la source lumineuse laser à variation de la longueur d'onde (1) en fonction d'informations de longueur d'onde obtenues dans la seconde région de commande de longueur d'onde (81) pour obtenir ladite longueur d'onde spécifique $\lambda_0$.

2. Procédé de commande de longueur d'onde selon la revendication 1,
   dans lequel lesdites régions de commande de longueur d'onde font partie dudit support d'enregistrement d'hologramme (20) qui contient des informations enregistrées avec ladite longueur d'onde spécifique $\lambda_0$.

3. Procédé de commande de longueur d'onde selon la revendication 1 ou 2,
dans lequel ladite détection (B) détecte une longueur d'onde qui maximise la quantité de ladite lumière de reproduction, à titre de longueur d'onde spécifique $\lambda_0$.

4. Procédé de commande de longueur d'onde selon la revendication 3,
dans lequel ledit ajustement (C) réajuste la longueur d'onde $\lambda$ pour maximiser ladite lumière de reproduction en modifiant très légèrement la longueur d'onde $\lambda$ autour de la longueur d'onde spécifique $\lambda_0$.

5. Procédé de commande de longueur d'onde selon la revendication 1 ou 2,
dans lequel lesdites informations de longueur d'onde incluent des informations représentant une différence entre la longueur d'onde $\lambda$ de la lumière de reproduction et la longueur d'onde spécifique $\lambda_0$, et dans lequel ladite détection (B) calcule ladite longueur d'onde spécifique en se basant sur lesdites informations de longueur d'onde.

6. Procédé de commande de longueur d'onde selon la revendication 1 ou 2,
dans lequel lesdites informations de longueur d'onde sont des informations représentant une valeur numérique de ladite longueur d'onde spécifique, et dans lequel ladite détection (B) calcule ladite longueur d'onde spécifique à partir desdites informations.

7. Dispositif de traitement d'informations d'hologramme, comportant :

une source de lumière laser à variation de la longueur d'onde (1) destinée à émettre une lumière laser pour enregistrer et/ou reproduire des informations sur et/ou depuis un support d'enregistrement d'hologramme (20) ;
une unité de détection de lumière (10, 17) destinée à détecter (B) une lumière de reproduction provenant dudit support d'enregistrement d'hologramme (20) ; et
une unité de commande (26) destinée à commander une longueur d'onde $\lambda$ de ladite lumière laser de ladite source lumineuse laser à variation de la longueur d'onde (1) en fonction d'un résultat de détection de ladite unité de détection de lumière (10, 17) et destinée à ajuster (C) ladite longueur d'onde $\lambda$ de ladite lumière laser à une longueur d'onde spécifique $\lambda_0$,

**caractérisé en ce que** l'unité de commande (26) est configurée pour que ladite détection (B) et ledit ajustement (C) soient effectués de la manière suivante :

en premier lieu, un ajustement approximatif de la longueur d'onde $\lambda$ de la lumière laser de la source lumineuse laser à variation de la longueur d'onde (1) en fonction d'informations de longueur d'onde obtenues dans une première région de commande de longueur d'onde (80) du support d'enregistrement d'hologramme (20) pour obtenir une longueur d'onde $\lambda_0$' approximativement ajustée, et
ensuite, ajuster précisément la longueur d'onde $\lambda_0$' approximativement ajustée de la lumière laser de la source lumineuse laser à variation de la longueur d'onde (1) en fonction d'informations de longueur d'onde obtenues dans une seconde région de commande de longueur d'onde (81) du support d'enregistrement d'hologramme (20) pour obtenir ladite longueur d'onde spécifique $\lambda_0$.

8. Dispositif de traitement d'informations d'hologramme selon la revendication 7,
dans lequel ladite unité de détection de lumière (10, 17) est configurée pour détecter la lumière de reproduction de la lumière laser émise par ladite source de lumière laser à variation de la longueur d'onde (1) dans au moins une région de commande de longueur d'onde (80, 81, 82) dudit support d'enregistrement d'hologramme contenant des informations enregistrées avec une longueur d'onde spécifique $\lambda_0$.

9. Dispositif de traitement d'informations d'hologramme selon la revendication 7 ou 8,
dans lequel ladite unité de commande (26) comporte :

un circuit de traitement du signal (25) destiné à comparer et à traiter des informations de longueur d'onde obtenues en appliquant ladite lumière laser émise avec ladite au moins une région de commande de longueur d'onde (80, 81, 82), et
une unité de commande d'ajustement de longueur d'onde (26) destinée à commander la longueur d'onde $\lambda$ de ladite lumière laser de ladite source de lumière laser à variation de la longueur d'onde (1) en réponse à une instruction dudit circuit de traitement du signal (25).

10. Dispositif de traitement d'informations d'hologramme selon la revendication 9,
dans lequel ledit circuit de traitement du signal (25) est configuré pour calculer la longueur d'onde qui maximise une quantité de la lumière de reproduction, à titre de longueur d'onde spécifique, en comparant les quantités de la lumière de reproduction détectée par ladite unité de détection de lumière (10, 17) et obtenue en émettant ladite lumière laser, respectivement, et

dans lequel l'unité de commande d'ajustement de longueur d'onde (26) est configurée pour ajuster la longueur d'onde $\lambda$ de ladite lumière laser de ladite source de lumière laser à variation de la longueur d'onde (1) pour qu'elle soit égale à ladite longueur d'onde spécifique $\lambda_0$.

11. Dispositif de traitement d'informations d'hologramme selon la revendication 9,
dans lequel ledit circuit de traitement du signal (25) est configuré pour calculer ladite longueur d'onde spécifique en détectant des informations représentant une différence entre ladite longueur d'onde spécifique $\lambda_0$ et la longueur d'onde de ladite lumière laser présente dans les informations de longueur d'onde, obtenue en émettant ladite lumière laser et détectée par ladite unité de détection de lumière (10, 17), et
dans lequel ladite unité de commande d'ajustement de longueur d'onde (26) est configurée pour ajuster la longueur d'onde $\lambda$ de ladite lumière laser de ladite source lumineuse laser à variation de la longueur d'onde (1) pour qu'elle soit égale à ladite longueur d'onde spécifique $\lambda_0$.

12. Dispositif de traitement d'informations d'hologramme selon la revendication 9,
dans lequel ledit circuit de traitement du signal (25) est configuré pour détecter des informations représentant une valeur numérique de la longueur d'onde spécifique $\lambda_0$, présente dans les informations de longueur d'onde obtenues en émettant ladite lumière laser, et détectées par ladite unité de détection de lumière (10,17), et
dans lequel ladite unité de commande d'ajustement de longueur d'onde (26) est configurée pour ajuster la longueur d'onde $\lambda$ de ladite lumière laser de ladite source de lumière laser à variation de la longueur d'onde (1) pour qu'elle soit égale à ladite longueur d'onde spécifique $\lambda_0$.

13. Dispositif de traitement d'informations d'hologramme selon la revendication 7 ou 8,
dans lequel ladite unité de commande (26) est configurée pour ajuster la longueur d'onde $\lambda$ de ladite lumière laser de ladite source de lumière laser à variation de la longueur d'onde (1) en fonction d'un résultat d'une détection de ladite unité de détection de lumière (10, 17) par rapport à une première région de commande de longueur d'onde (80) dudit support d'enregistrement d'hologramme (20) après ledit ajustement,
dans lequel ladite unité de détection de lumière (10, 17) est configurée pour détecter la lumière de reproduction de la lumière laser émise par la source de lumière laser à variation de la longueur d'onde (1) par rapport à une seconde région de commande de longueur d'onde (81) dudit support d'enregistrement d'hologramme (20), et
dans lequel ladite unité de commande (26) est configurée pour ajuster en outre la longueur d'onde $\lambda$ de ladite lumière laser de ladite source de lumière laser à variation de la longueur d'onde pour qu'elle soit égale à ladite longueur d'onde spécifique $\lambda_0$, en fonction des résultats de la détection de ladite unité de détection de lumière (10, 17) par rapport à ladite seconde région de commande de longueur d'onde (81).

14. Dispositif de traitement d'informations d'hologramme selon la revendication 13,
dans lequel une plage d'une longueur d'onde détectable de ladite région de commande de longueur d'onde (80) est plus large que celle de ladite seconde région de commande de longueur d'onde (81), et
dans lequel ladite unité de commande (26) est configurée pour calculer la longueur d'onde qui maximise la lumière de reproduction détectée par ladite unité de détection de lumière (10, 17) par rapport à ladite première région de commande de longueur d'onde (80), et est configurée pour procéder en outre à un ajustement de telle sorte que la longueur d'onde qui maximise la lumière de reproduction détectée par ladite unité de détection de lumière (10, 17) par rapport à ladite seconde région de commande de longueur d'onde (81) devient égale à ladite longueur d'onde spécifique $\lambda_0$.

15. Dispositif de traitement d'informations d'hologramme selon la revendication 7 ou 8,
dans lequel ladite source de lumière laser à variation de la longueur d'onde (1) comporte :

un réseau de diffraction (52), et
un laser à semi-conducteurs à cavité externe (50).

16. Dispositif de traitement d'informations d'hologramme selon la revendication 15,
dans lequel ladite source de lumière laser à variation de la longueur d'onde (1) inclut en outre un mécanisme d'ajustement de rotation (54) destiné à assurer la rotation dudit réseau de diffraction (52).

17. Support d'enregistrement d'hologramme (20), comportant :

une région d'enregistrement d'informations (200) contenant un hologramme écrit par interférence entre une lumière d'objet et une lumière de référence ; et
au moins une première et une seconde régions de commande de longueur d'onde (80, 81) contenant des informations de longueur d'onde pour la détection d'une longueur d'onde spécifique $\lambda_0$, à titre, au choix, d'une longueur d'onde d'enregistrement optimale ou d'une longueur d'onde de reproduction optimale, dans lequel les première et seconde régions de commande de longueur d'onde (80, 81) sont des motifs de commande de longueur d'onde possédant chacun une efficacité de diffraction maximale pour la longueur d'onde $\lambda_0$,

**caractérisé en ce que**

l'acuité de l'efficacité de la diffraction par rapport aux changements de longueur d'onde est supérieure pour la seconde région de commande de longueur d'onde (81) à celle de la première région de commande de longueur d'onde (80), de sorte que

lesdites informations de longueur d'onde contiennent des informations destinées à :

- en premier lieu, un ajustement approximatif de la longueur d'onde $\lambda$ de la lumière laser de la source lumineuse laser à variation de la longueur d'onde (1) en fonction d'informations de longueur d'onde obtenues dans la première région de commande de longueur d'onde pour obtenir une longueur d'onde $\lambda_0$' approximativement ajustée, et
- ensuite, un ajustement précis de la longueur d'onde $\lambda_0$' approximativement ajustée de la lumière laser de la source lumineuse laser à variation de la longueur d'onde (1) en fonction d'informations de longueur d'onde obtenues dans la seconde région de commande de longueur d'onde pour obtenir ladite longueur d'onde spécifique $\lambda_0$.

18. Support d'enregistrement d'hologramme (20) selon la revendication 17,
dans lequel lesdites régions de commande de longueur d'onde (80, 81) contiennent lesdites informations de longueur d'onde correspondant à la lumière laser de chacune de plusieurs longueurs d'onde, lesdites longueurs d'ondes étant fixées à des valeurs discrètes, respectivement.

19. Support d'enregistrement d'hologramme (20) selon la revendication 18,
dans lequel, en supposant qu'une seconde longueur d'onde est l'une des longueurs d'ondes permettant d'obtenir une efficacité de diffraction égale à zéro lorsque le signal d'information de longueur d'onde enregistré avec une première longueur d'onde est reproduit, et est la plus proche de ladite première longueur d'onde, chacune des différences entre lesdites plusieurs longueurs d'ondes est fixée à une valeur inférieure à une valeur absolue d'une différence entre ladite première longueur d'onde et ladite seconde longueur d'onde.

20. Support d'enregistrement d'hologramme (20) selon la revendication 19,
dans lequel lesdites régions de commande de longueur d'onde (80,81) contiennent lesdites informations de longueur d'onde, de telle sorte qu'une quantité de la lumière de reproduction se modifie en fonction de la lumière laser de chacune desdites plusieurs longueurs d'ondes en fonction d'une règle donnée, et contiennent lesdites informations de longueur d'onde indiquant au moins l'une, au choix, de la longueur d'onde d'enregistrement optimale et de la longueur d'onde de reproduction optimale qui maximise la quantité de la lumière de reproduction.

21. Support d'enregistrement d'hologramme (20) selon la revendication 18,
dans lequel lesdites informations de longueur d'onde incluent des informations relatives à au moins l'une de la longueur d'onde d'enregistrement optimale et de la longueur d'onde de reproduction optimale, la longueur d'onde de reproduction étant affectée pour chacune des longueurs d'ondes d'enregistrement.

22. Support d'enregistrement d'hologramme (20) selon la revendication 21,
dans lequel lesdites informations de longueur d'onde contiennent des informations représentant une valeur numérique d'au moins l'une de la longueur d'onde d'enregistrement optimale et de la longueur d'onde de reproduction optimale pour chacune des longueurs d'ondes d'enregistrement.

23. Support d'enregistrement d'hologramme (20) selon la revendication 17,
dans lequel lesdites régions de commande de longueur d'onde (80, 81) incluent une première région de commande de longueur d'onde (80) assurant une plage large de longueurs d'ondes détectables, et une seconde région de commande de longueur d'onde (81) assurant une plage étroite de longueurs d'ondes détectables.

24. Support d'enregistrement d'hologramme (20) selon la revendication 23,
dans lequel ladite première région de commande de longueur d'onde (80) contient lesdites informations de longueur d'onde enregistrées avec la lumière laser au moyen de plusieurs longueurs d'ondes fixées à des valeurs discrètes, respectivement.

25. Support d'enregistrement d'hologramme (20) selon la revendication 24,
dans lequel ladite seconde région de commande de longueur d'onde (81) contient lesdites informations de longueur d'onde enregistrées avec la lumière laser d'une longueur d'onde unique.

FIG.1

FIG.2

FIG.3

80 81

200

20

81 80

FIG.4

4

70

## FIG.5
RECORD LIGHT QUANTITY P

## FIG.6
DIFFRACTION EFFICIENCY

## FIG.7

DIFFRACTION EFFICIENCY

$\lambda_0$

$\lambda$

## FIG.8

START — S0

S1
MOVE TO WAVELENGTH CONTROL PATTERN

S2
APPLY LASER LIGHT

S3
OBSERVE REPRODUCTION LIGHT
BY LIGHT RECEIVING ELEMENT

S4
OBTAIN WAVELENGTH $\lambda_0$ MAXIMIZING
QUANTITY OF REPRODUCTION LIGHT BY
CHANGING WAVELENGTH OF LASER LIGHT

S5
ADJUST WAVELENGTH OF LASER LIGHT
OF WAVELENGTH-VARIABLE LASER
LIGHT SOURCE

# FIG.9

```
          ( START )— S10
                │
                ▼                    ┌ S11
┌──────────────────────────────────────┐
│ MOVE TO ROUGH ADJUSTMENT PATTERN       │
└──────────────────────────────────────┘
                │                    ┌ S12
                ▼
┌──────────────────────────────────────┐
│ ADJUST TO WAVELENGTH λ o' MAXIMIZING   │
│ RETURN LIGHT BY CHANGING               │
│ WAVELENGTH OF LASER LIGHT              │
└──────────────────────────────────────┘
                │                    ┌ S13
                ▼
┌──────────────────────────────────────┐
│   MOVE TO FINE ADJUSTMENT PATTERN      │
└──────────────────────────────────────┘
                │                    ┌ S14
                ▼
┌──────────────────────────────────────┐
│ OBTAIN WAVELENGTH λ o MAXIMIZING       │
│ RETURN LIGHT BY MINUTELY CHANGING      │
│ WAVELENGTH OF LASER LIGHT              │
└──────────────────────────────────────┘
                │                    ┌ S15
                ▼
┌──────────────────────────────────────┐
│ ADJUST WAVELENGTH OF LASER LIGHT       │
│ OF WAVELENGTH-VARIABLE LASER           │
│ LIGHT SOURCE                           │
└──────────────────────────────────────┘
```

FIG.10

## FIG.11

```
        ( START )—S20
              │
              ▼                    ⌐S21
┌─────────────────────────────────────┐
│  MOVE TO WAVELENGTH CONTROL PATTERN  │
└─────────────────────────────────────┘
              │
              ▼                    ⌐S22
┌─────────────────────────────────────┐
│           APPLY LASER LIGHT          │
└─────────────────────────────────────┘
              │
              ▼                    ⌐S23
┌─────────────────────────────────────┐
│      OBSERVE REPRODUCTION LIGHT      │
│      BY LIGHT RECEIVING ELEMENT      │
└─────────────────────────────────────┘
              │
              ▼                    ⌐S24
┌─────────────────────────────────────┐
│       CHANGE WAVELENGTH UNTIL        │
│   REPRODUCTION LIGHT IS DETECTED     │
└─────────────────────────────────────┘
              │
              ▼                    ⌐S25
┌─────────────────────────────────────┐
│  READ INFORMATION WITH WAVELENGTH λ1 │
└─────────────────────────────────────┘
              │
              ▼
```

READ INFORMATION CONTAINS INFORMATION REPRESENTING WAVELENGTH ? — S26 — NO

YES — S27

PROVISIONALLY DETERMINE WAVELENGTH $\lambda_0'$ BASED ON READ INFORMATION

S28

CONTROL WAVELENGTH-VARIABLE LASER TO WAVELENGTH $\lambda_0'$

S29

OBTAIN WAVELENGTH $\lambda_0$ MAXIMIZING REPRODUCTION LIGHT BY MINUTELY CHANGING WAVELENGTH

S30

ADJUST WAVELENGTH OF LASER LIGHT OF WAVELENGTH-VARIABLE LASER LIGHT SOURCE

# FIG.12

EP 1 942 493 B1

## FIG.13

DIFFRACTION EFFICIENCY

sinc$^2$x

## FIG.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006338731 A
- JP 2006155831 A
- US 20060280210 A1
- JP 2006267803 B
- US 20060171284 A1
- US 20060114535 A
- EP 1732066 A
- US 20060133237 A1
- US 20060215527 A